# EUROPEAN PATENT SPECIFICATION

(11) **EP 2 478 452 B1**
(45) Date of publication and mention of the grant of the patent: **19.12.2018**
(21) Application number: 10816849.3
(22) Date of filing: 03.09.2010
(51) Int. Cl.: G06F 17/30, G06F 12/00

(54) **FILE SEARCH SYSTEM AND PROGRAM**
DATENSUCHSYSTEM UND -PROGRAMM
SYSTÈME ET PROGRAMME DE RECHERCHE DE FICHIERS

(30) Priority: 18.09.2009 JP 2009217344
(43) Date of publication of application: 25.07.2012
(73) Proprietor: Hitachi Solutions, Ltd., Tokyo 140-0002 (JP)
(72) Inventor: ETO, Tatsuya, Tokyo 140-0002 (JP); MATSUURA, Masakazu, Tokyo 140-0002 (JP); TSURUTA, Seiya, Tokyo 140-0002 (JP)
(74) Representative: Liesegang, Eva
(86) International application number: PCT/JP2010/005435
(87) International publication number: WO 2011/033734

(56) References cited:
- JP-A- 8 272 806
- JP-A- 2000 315 209
- JP-A- 2001 344 245
- JP-A- 2003 323 427
- JP-A- 2006 178 599
- JP-A- 2008 217 600
- Ben Martin: "Federated Desktop and File Server Search with libferris Federated Desktop and File Server Search with libferris", , 28 July 2007 (2007-07-28), XP55204545, DOI: 10.1145/1190000/11 Retrieved from the Internet: URL:http://www.ee.ryerson.ca/~courses/coe5 18/LinuxJournal/elj2006-152-libferris.pdf [retrieved on 2015-07-24]
- PAULALEXANDRU CHIRITA ET AL: "Activity Based Metadata for Semantic Desktop Search", 19 May 2005 (2005-05-19), THE SEMANTIC WEB: RESEARCH AND APPLICATIONS; [LECTURE NOTES IN COMPUTER SCIENCE;;LNCS], SPRINGER-VERLAG, BERLIN/HEIDELBERG, PAGE(S) 439 - 454, XP019009877, ISBN: 978-3-540-26124-7 * the whole document *

## Description

### Technical Field

The present invention relates to a file search system and program that create an index file in advance for files subject to search, and search for files by referencing the index file.

### Background Art

In recent years, digitization of information has advanced rapidly. In the past, digitization mainly involved storing in files and DBs (databases) data to be referenced in order for computer systems at enterprises, public offices, etc., to perform core operations, such data including bank accounts, city/town/village resident registers, etc.

On the other hand, today, various documents created in day-to-day operations in such organizations as enterprises, etc., are stored as document files on the client PC (Personal Computer) of each employee, and transmitted to other client PCs as e-mail attachments, or stored onfile servers as shared information for the organization as a whole. In addition, document files stored on file servers are referenced by various employees, and are sometimes copied to and updated on client PCs.

As large amounts of digital information are thus distributed among and stored on various computers, duplicate or similar digital information end up being present in large amounts within the organization. In addition, the stored volume of various digital information is continuing to grow as well.

On the other hand, within organizations, for example, cases often arise where one might wishto reference digital information whose storage location is unknown, such as when a document file created in the past by an ex-employee who has already left the organization is needed, and so forth. In such cases, it is common practice to search for a document file, etc., through a full-text search, etc., using a keyword(s) that is/are expected to be found in the document file of interest.

Incidentally, if digital information were to be searched in all computers within an organization, the client PC of each employee would also have to allow access from all employees, which is undesirable in terms of security. Thus, what is generally done is to store on a predetermined file server(s) digital information that is to be shared across the organization as a whole.

However, even if document files, etc., were stored on several predetermined file servers, ifone were to search through all of the files stored on the file servers each time a document file is needed, a large amount of time would be needed to perform file I/O (input/output), etc.

For this reason, there is known a technique where, as in Patent Literature 1, with respect to document files, etc., stored on a file server(s), information of a relatively small volume(index information) for use in searches, such as storage locations, keywords, etc., is stored as an index file. Specifically, by creating an index file, it becomes possible to obtain index information relating to a plurality of files through one file I/O during searches, thereby obviating the need for file I/O with respect to each document file, etc. As a result, the response time during file searches can be shortened, and the load on the file server(s) can be reduced.

The article Federated Desktop and File Server Search with libferris by Ben Martin (DOI: 10.1145/1190000/11, XP55204545, 01 December 2006) deals with the virtual file system *libferris* used for managing and searching metadata. Details are given in the article as to how to carry out combined full-text and metadata searches using *libferris,* with specification of software-specific commands and setups.

The article "Activity Based Metadata for Semantic Desktop Seearch" by Paul Alexandru Chirita et al. (Lecture Notes in Computer Science; LNCS, Springer-Verlag, 2005, ISBN: 978-3-540-26124-7) deals with ways of extracting and storing activity based context information available in emails, folder hierarchies, browser cache and others as metadata and how to use them to enhance desktop search.

### Citation List

### Patent Literature

PTL 1: Japanese Patent Publication (Kokai) No. 2003-162545 A

### Summary of Invention

### Technical Problem

However, in order to perform a file search through such a technique as that disclosed in Patent Literature 1, it is necessary to create an index file for all files that are to be subject to search.

Although the storage volume of index information is relatively small compared to the actual files, in order to enable full-text searches by keywords, it is necessary to analyze keywords contained in the files and store them in the index information. Thus, as the number of keywords contained in the files increases, an accordingly greater capacity becomes necessary. Therefore, as the number of files that are to be subject to search increases, the storage volume of the index file becomes greater.

Considering now, for example, file searches within an organization, even when files are stored on a shared file server, it is often the case that each department has access to limited folders, etc., files are stored under those limited folders, etc., and searches are performed therein. In such cases, a method is often adopted where folders are given, for example, such names as "work report folder" and the like, and files that are congruent with those names are stored in the respective folders, that is, a method where files are classified by way of folders. Further, in such cases, since files of interest can be retrieved by following the tree structure of folders, full-text searches by keywords are rarely required.

Thus, even if a file is stored in the wrong folder, as long as there is a small-volume indexfile by purpose, title, etc., of files, a search is often possible by referencing the index information in the index file.

In other words, with respect to such files as documents, etc., created within an organization, a search is often possible as long as there is a small-volume index file by purpose, title, etc., of files. On the other hand, for example, with respect to files that are obtained from outside of the organization, such as patent documents, technical papers, etc., or with respect to files that are present on servers outside of the organization, such as web servers, etc., they are also often referenced for purposes that were not intended at the time theywere obtained, often calling for full-text searches by keywords.

Thus considering files searches within organizations, there are files for which full-text searches should be allowed, and files for which full-text searches are unnecessary. This is applicable not only to organizations, but also to file searches, for example, that are performed personally.

In view of the circumstances above, an object of the present invention is to provide a file search system and program that perform effective searches by creating, with respect to a file search environment in which files for which a full-text search should be allowed and files for which a full-text search is unnecessary coexist, different index files between the files for which a full-text search should be allowed and the files for which a full-text search is unnecessary.

### Solution to Problem

In order to solve the problems above, the present invention provides the configurations below.

A first aspect of the invention provides a file search in accordance with appended independent claim 1.

A second aspect of the invention provides the file search system according appended claim 2.

The invention according to a third aspect provides the file search system according to the appended claim 3.

The invention according to a fourth aspect provides a file search system program according to appended independent claim 4.

The invention according to a fifth aspect provides the file search system program according to the fourth aspect, wherein the file search server is caused to execute the instructions according to appended claim 5.

The invention according to an sixth aspect provides the file search system program according to the fifth aspect, wherein the file search server is caused to execute the instructions according to appended claim 6.

### Advantageous Effects of Invention

According to the present invention, it is possible to provide a file search program that performs effective searches by creating, with respect to a file search environment in which files for which full-text searches should be allowed and files for which full-text searches are unnecessary coexist, differing index files between the files for which full-text searches should be allowed and the files for which full-text searches are unnecessary.

### Brief Description of Drawings

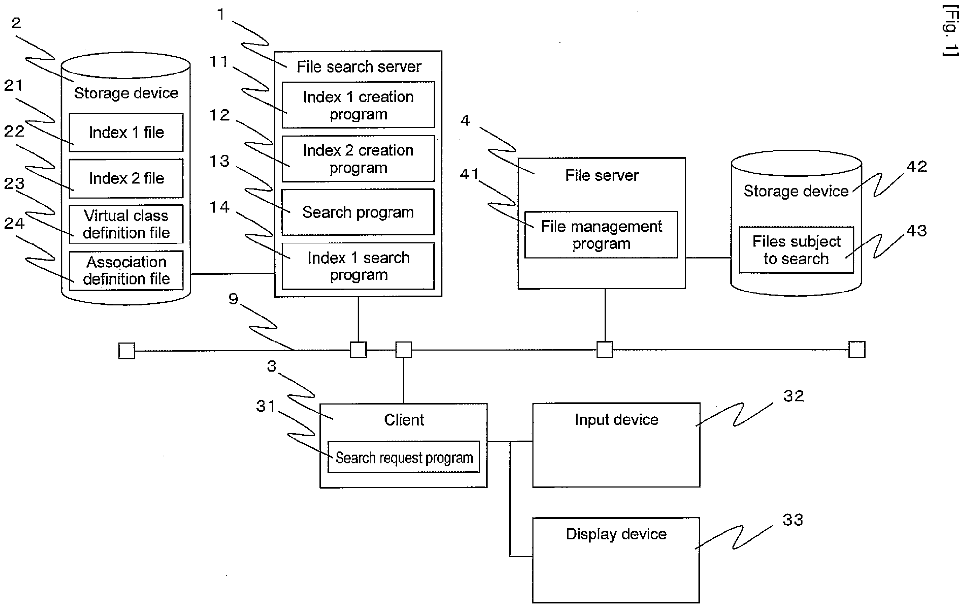

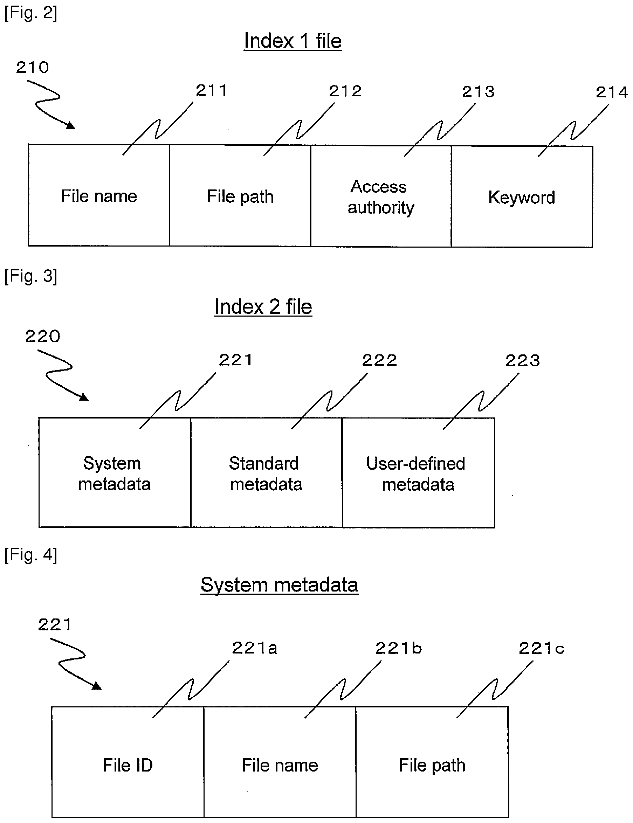

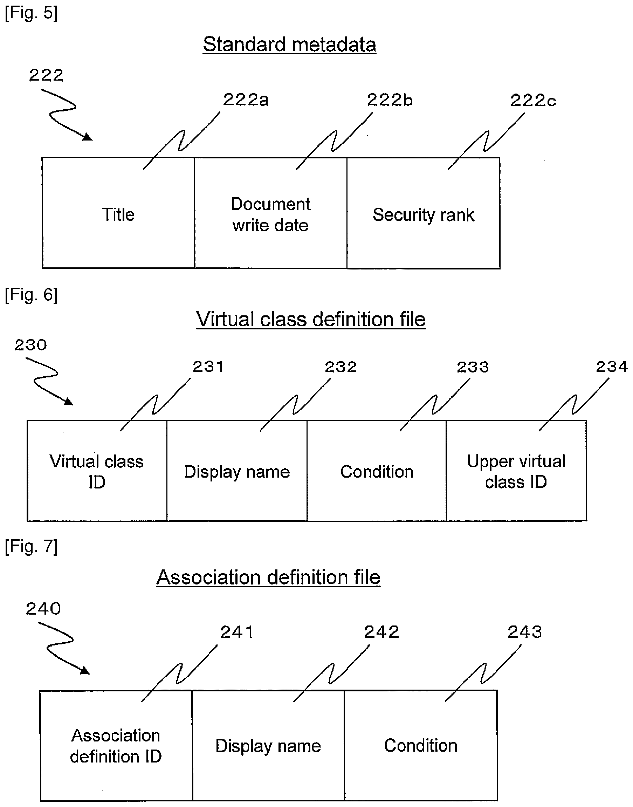

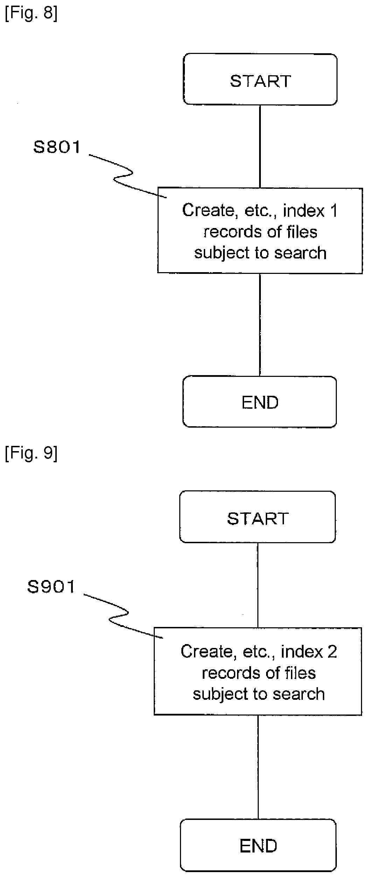

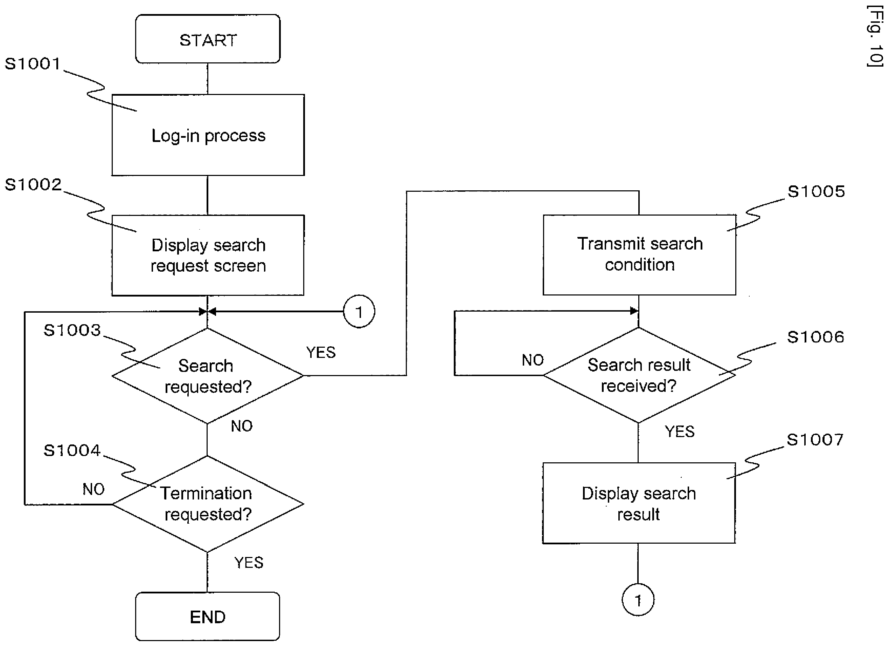

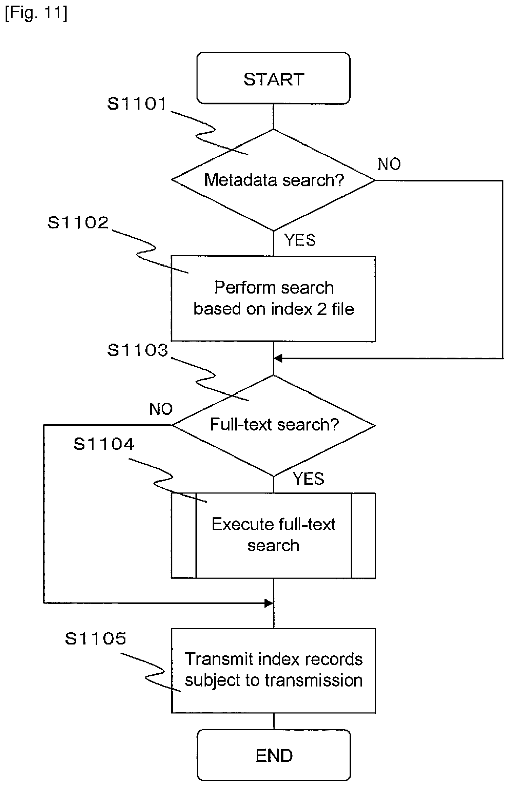

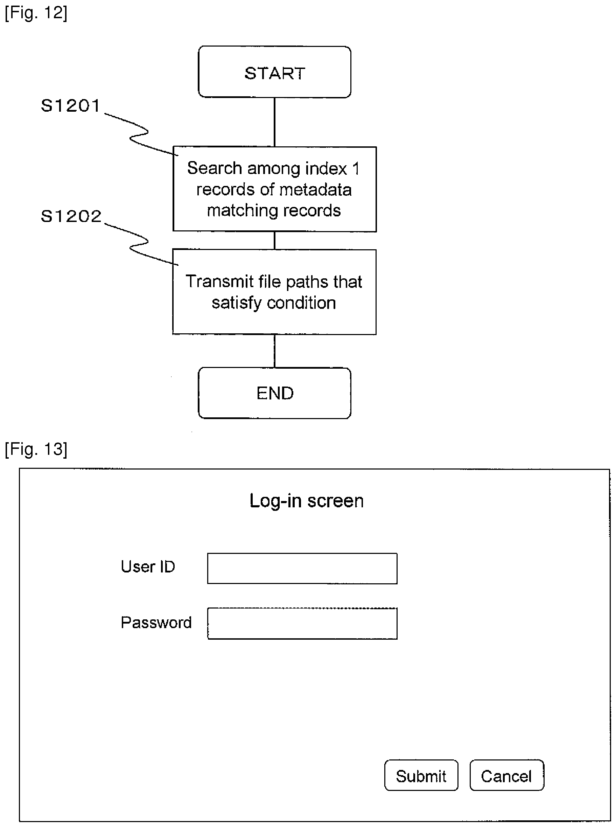

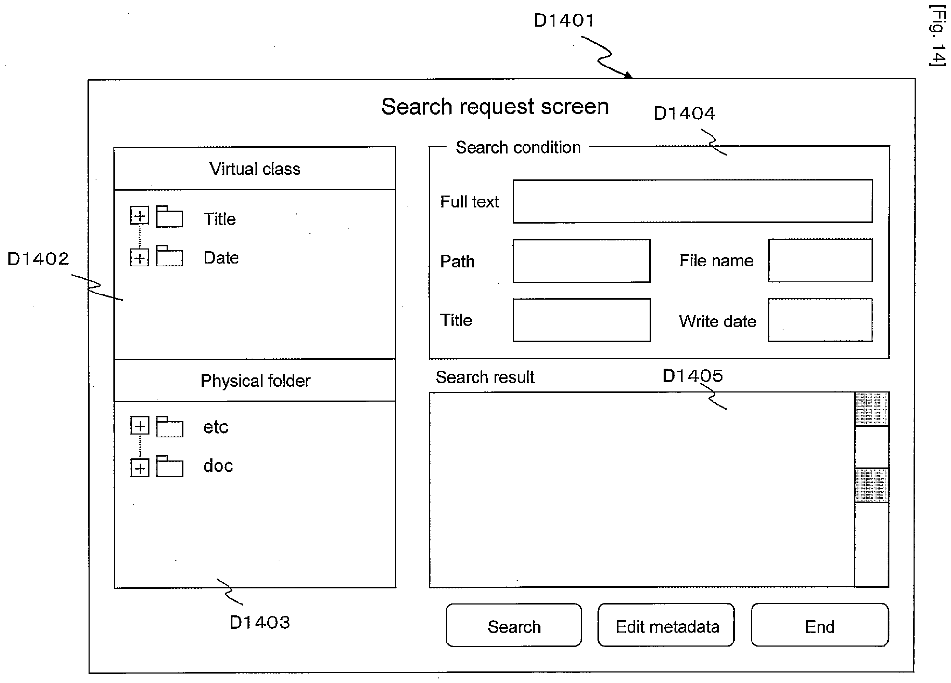

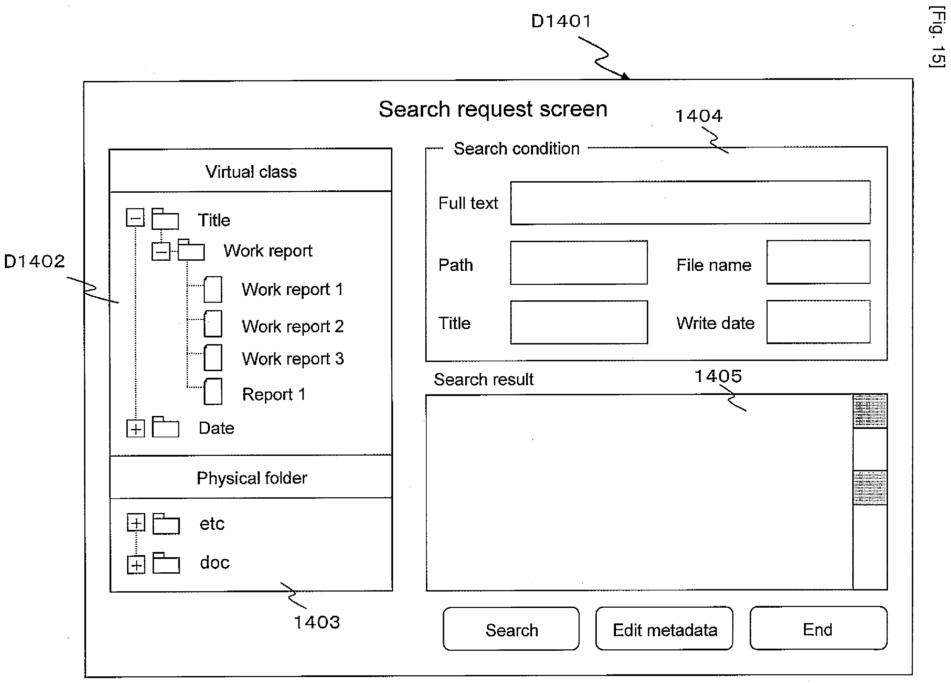

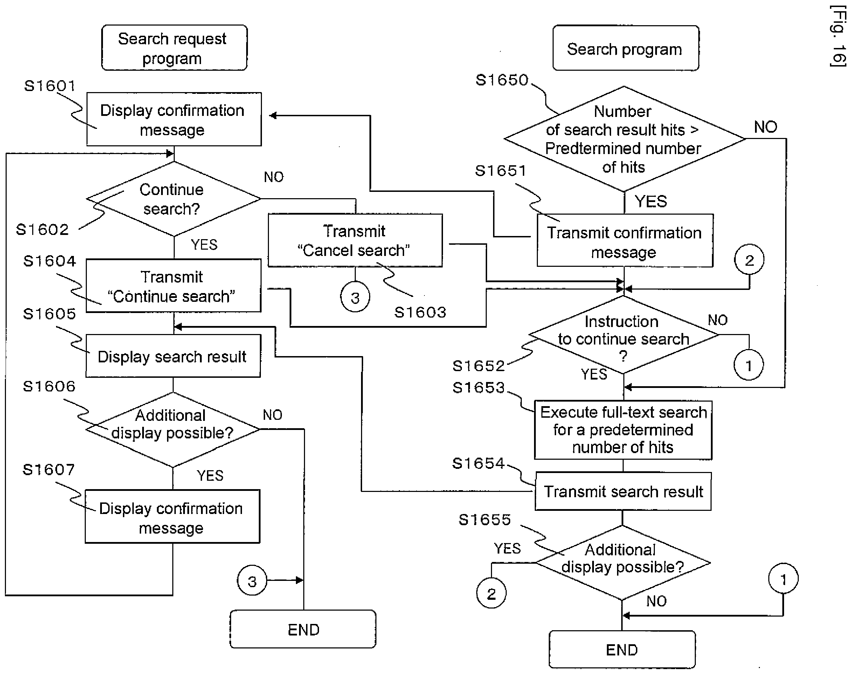

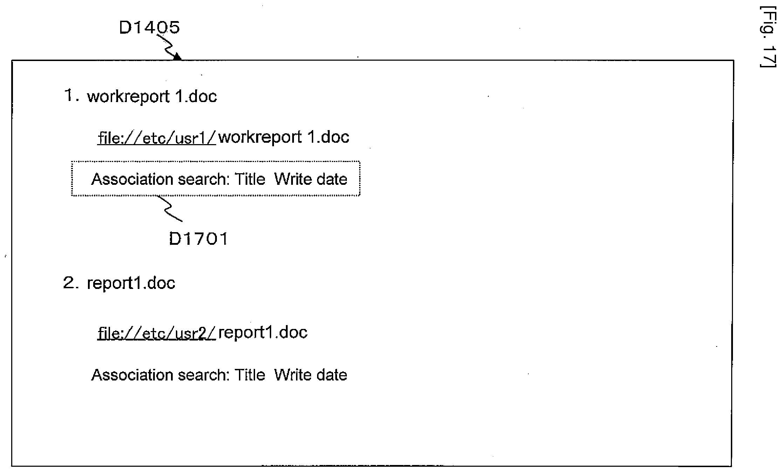

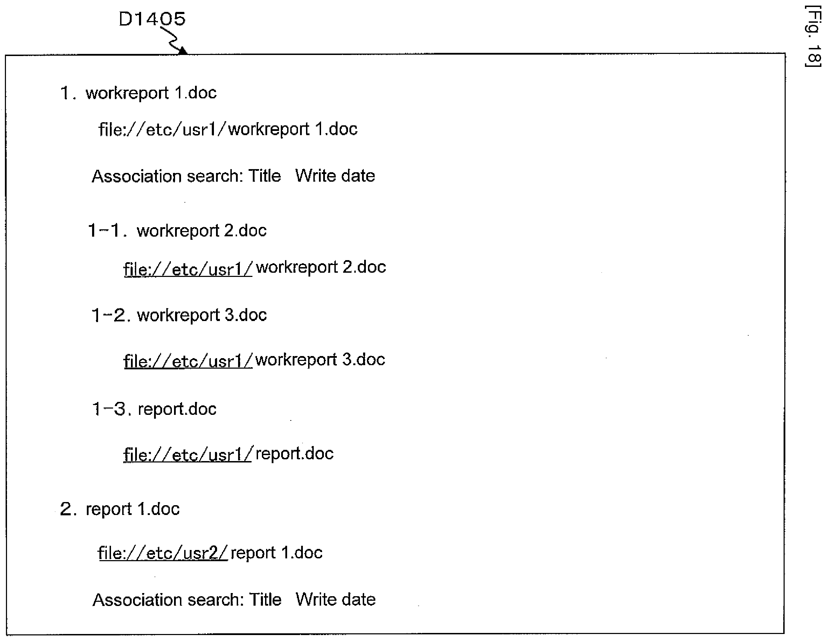

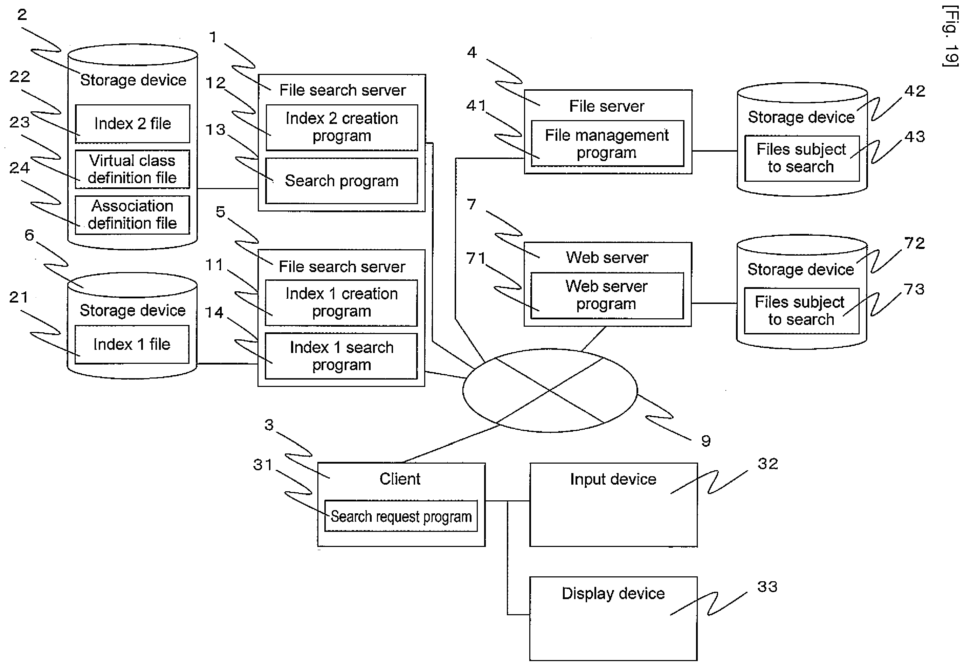

{Fig. 1} Fig. 1 is a system configuration diagram for a file search system according to Example 1 of the present invention.
{Fig. 2} Fig. 2 is a data structure diagram for an index 1 file according to Example 1 of the present invention.
{Fig. 3} Fig. 3 is a data structure diagram for an index 2 file according to Example 1 of the presentinvention.
{Fig. 4} Fig. 4 is a data structure diagram for system metadata according to Example 1 of the presentinvention.
{Fig. 5} Fig. 5 is a data structure diagram for standard metadata according to Example 1 of the present invention.
{Fig. 6} Fig. 6 is a data structure diagram for a virtual class definition file according to Example 1 of the present invention.
{Fig. 7} Fig. 7 is a data structure diagram for an association definition file according to Example 1 of the present invention.
{Fig. 8} Fig. 8 is a flowchart showing operations of an index 1 creation program according to Example 1 of the present invention.
{Fig. 9} Fig. 9 is a flowchart showing operations of an index 2 creation program according to Example 1 of the present invention.
{Fig. 10} Fig. 10 is a flowchart showing operations of a search request program according to Example 1 of the present invention.
{Fig. 11} Fig. 11 is a flowchart showing operations of a search program according to Example 1 of the present invention.
{Fig. 12} Fig. 12 is a flowchart showing operations of an index 1 search program according to Example 1 of the present invention.
{Fig. 13} Fig. 13 is a diagram showing an example of a log-in screen according to Example 1 of the present invention.
{Fig. 14} Fig. 14 is a diagram showing an example of a search request screen according to Example 1 ofthe present invention.
{Fig. 15} Fig. 15 is a diagram showing an example of a search request screen according to Example 1 ofthe present invention and in which a tree-view is provided.
{Fig. 16} Fig. 16 is a flowchart showing operations of a search program, etc., according to Example 1 of the present invention and with respect to a compound search.
{Fig. 17} Fig. 17 is a diagram showing an example of the displayed content of a search result on a search request screen according to Example 1 of the present invention.
{Fig. 18} Fig. 18 is a diagram showing an example of the displayed content of an association search result on a search request screen according to Example 1 of the present invention.
{Fig. 19} Fig. 19 is a system configuration diagram for a file search system according to Example 2 ofthe present invention.

### Description of Embodiments

Embodiments of the present invention are described below with reference to drawings showing examples.

It is noted that the file search server, the second file search server, the file server, the client and the web server mentioned above are computers, and that the various means mentioned above are means that are realized by having the CPU of a computer load and execute required computer programs, and whose flowcharts are shown in Fig. 8 through Fig. 12 and in Fig. 16.

Further, in the description to follow, the term "file" refers to any kind of electronic datathat is subject to browsing, viewing/listening, e-mail transmission/reception, copying to external storage media, etc., and shall include, unless otherwise stated, not only such files as document files, image files, etc., but also databases as a whole, individual records in a database, etc.

### Example 1

Fig. 1 is a system configuration diagram for a file search system of Example 1 according to the present invention.

### <Configuration/Function of File Search System as a Whole>

The file search system in Example 1 is a system in which a file search server 1, a file server 4 and a client 3 are communicably connected by means of a wired or wireless communications line 9 such as a LAN (Local Area Network), etc. Although one each of the file search server 1, the file server 4 and the client 3 are shown here, there may also be two or more of each. Further, the communications line 9 is by no means limited to a LAN, and may also be, for example, a WAN (Wide Area Network), the Internet, or a combination thereof.

Through such a configuration, as will be discussed in detail later, the file search server 1 is able to collect the names, etc., of files stored on the file server 4, and create and store an index file. The client 3 is then able to transmit a file search request (hereinafter sometimes abbreviated as "search request") to the file search server 1, and the file search server 1 is able to perform a file search by referencing the index file mentioned above and to transmit a file search result (hereinafter sometimes abbreviated as "search result") to the client 3.

### <Configuration/Function of Client 3>

Client 3 is a device such as a PC, etc., and is communicably connected to an input device 32and a display device 33. The input device 32 may be a device(s) such as a keyboard, a mouse, etc., and by operating the input device 32, the operator of the client 3 is able to instruct processes to be executed by the client 3. In other words, the input device 32 functions as an input means for the client 3.

The display device 33 may be a device such as a liquid crystal display, a printer, etc., and displays or prints out results, etc., of a process(es) executed by the client 3. In other words, the display device 33 functions as a display means and/or an output means for the client 3. Further, although not shown in the diagram, the client 3 comes with a built-in or externally connected storage device comprising a magnetic disk, etc. The storage device and a main storage device, etc., of the client 3, although not shown, function as storage means for the client 3.

The client 3 comprises, although not shown, a CPU (Central Processing Unit), the main storage device, etc. The CPU, although not shown, executes various processes by loading a program, such as a search request program 31, etc., stored on the storage device, into main memory,and executing the operation codes thereof. In addition, in executing the operation codes ofsuch application programs as the search request program 31, etc., the CPU sometimes also executes the operation codes of such programs as an OS (Operating System), etc. As the art relating to such program execution is well-known, in the description to follow and in the drawings, for purposes of preventing the description pertaining to program execution from becoming tedious, a description will be provided as though the search request program 31, etc., mainly execute the processes. It is noted that the function(s) of each program may also be realized through electronic devices, or by a combination of electronic devices and firmware, etc.

Upon receiving a file search condition and a file search instruction (e.g., an instruction to search for a file(s) whose file name is "work report") that have been inputted by the operator of the client 3 through the input device 32, the search request program 31 creates a conditional search expression, and transmits to the file search server 1 a search request containing the conditional search expression. In addition, a search result transmitted from the file search server 1 to the client 3 is received and displayed on the display device 33. The search request program 31 may be an original program relating to Example 1, or it may alsobe, for example, a web browser. If a web browser is to be used as the search request program 31, a search program 13 of the later-described file search server 1 may be, for example, a web application.

### <Configuration/Function of File Server 4>

The file server 4 is a device such as a PC, etc., and is communicably connected to a storagedevice 42. The storage device 42 is a device such as a magnetic disk, etc., and is built into or externally connected to the file server 4. In Fig. 1, an example is shown where one storage device 42 is connected to the file server 4. However, in reality, it is more often the case that two or more storage devices 42 are connected to the file server 4. In addition, two or more storage devices 42 are also often switchably connected to two or more file servers 4.

While various files are stored on the storage device 42, of these files, those that are subject to index creation by the later-described file search server 1 are referred to as "files 43 subject to search" in Fig. 1. In other words, it is not that there are specific files called the files 43 subject to search. Rather, the files 43 subject to search may, for example, be all files stored on the storage device 42, or a portion of the files stored on the storage device 42, such as all files within a specific folder, and so forth.

The file server 4 comprises a file management program 41. The file management program 41 manages the storage locations, etc., of the files stored on the storage device 42, including the files 43 subject to search. In addition, the file management program 41 also comprises the functions of receiving from the file search server 1 the storage location, etc., of a file, reading the file 43 subject to search, etc., stored at this storage location, and transmitting to the file search server 1 the stored content of this file.

### <Configuration/Function of File Search Server 1>

The file search server 1 is a device such as a PC, etc., and is communicably connected to a storage device 2.

The storage device 2 is a device such as a magnetic disk, etc., and is built into or externally connected to the file server 1. Although, in Fig. 1, an example is shown where one storage device 2 is connected to the file search server 1, there may also be two or more of them. The storage device 2 and, although not shown, a main storage device, etc., of the file server 1 function as storage means of the file server 1.

An index 1 file 21, an index 2 file 22, a virtual class definition file 23 and an association definition file 24 are stored on the storage device 2. The stored contents, etc., of these files will be described later in conjunction with a description on the functions of the file search server 1.

The file search server 1 comprises an index 1 creation program 11, an index 2 creation program 12, the search program 13 and an index 1 search program 14.

The index 1 creation program 11 references the files 43 subject to search at predetermined times, such as every day at the same time, for example, and creates the index 1 file 21. In the index 1 file 21 are stored, as will be described later, file names, keywords extracted from file contents, etc.

Which files are to be taken to be the files 43 subject to search may be specified by, for example, although not shown in the drawings, storing on the storage device 2 in advance one ormore file paths (e.g., "/etc/usrl/", etc.) for the storage device 42, and having the files under these file paths be the files 43 subject to search. It is noted that when, for example, there are two or more storage devices 42, the file paths may be so stored as to include information as to which storage device they point to, and so forth. By thus creating the index 1 file 21, it becomes possible to perform a file search by referencing the index 1 file 21, thereby making it unnecessary to reference the files 43 subject to search each time a search is performed, and the time it takes to process a search is thus shortened.

It is noted that in thus performing a search by referencing the index 1 file 21, if, after the index 1 file 21 is created, the files 43 subject to search are deleted or modified (e.g.,if the index 1 file 21 is created with respect to a file whose file name is "work report," and this file is then deleted) and a search is performed in the index 1 file 21, the search result obtained would be different from that which would have been obtained had a search been performed in the files 43 subject to search (i.e., it would appear as though a file whose file name is "work report" exists when the index 1 file 21 is referenced, even though no such file exists among the files 43 subject to search). As such, as described above, it is possible to arrange for the index 1 creation program 11 to perform processing at predetermined times, such as everyday at the same time, etc. Through such an arrangement, the index 1 file 21 can be updated regularly, thereby preventing it from grossly deviating from the files 43 subject to search.

In addition, by shortening the intervals at which the index 1 creation program 11 performs processing (for example, by arranging for processing to be performed once per hour), it is possible to further reduce deviation of the index 1 file 21 from the files 43 subject to search. However, to shorten the intervals at which the index 1 creation program 11 performs processing is to shorten the intervals at which I/Os are incurred with respect to all of the files 43 subject to search. Therefore, the performance, etc., of the file server 4 must also be taken into consideration in deciding on the intervals at which the index 1 creation program 11 is to perform processing.

For example, an effective method might be one where, with respect to the file server 4, a program that constantly monitors CPU usage, I/O frequency over a given period, etc., is run and if CPU usage, I/O frequency over a given period, etc., fall below predetermined values, this fact is transmitted to the index 1 creation program 11, and the index creation program 11 begins processing, and so forth. Alternatively, it may be such that, with respect to the file server 4, a program that constantly monitors I/O with respect to the files 43 subject to search is run, and each time any of the files 43 subject to search are updated, etc., this fact is notified to the index 1 creation program 11, and the index information within the index 1 file 21 and pertaining to the relevant files is updated.

As with the index 1 creation program 11, the index 2 creation program 12 also references the files 43 subject to search at predetermined times such as every day at the same time, for example, and creates the index 2 file 22. In Example 1, in the index 2 file 22 are stored, aswill be described later, titles, etc., of documents that are stored in the files as determined from the file contents. In other words, while the stored contents of the index 1 file 21 and the stored contents of the index 2 file 22 may partially overlap, they are not completely identical.

Which files are to be taken to be the files 43 subject to search may be specified by, as with the index 1 creation program 11, storing in the storage device 2 in advance one or more file paths (e.g., "/etc/usr1/", etc.) for the storage device 42, and having the files under these file paths be the files 43 subject to search. The files 43 subject to search of the index 1 creation program 11 and the files 43 subject to search of the index 2 creation program 12 may be the same, overlap partially, or be completely different.

It is noted that in performing a search by referencing the thus created index 2 file 22, as is the case when a search is performed by referencing the index 1 file 21, there arises the problem that the stored contents of the index 2 file 22 sometimes deviate from the contents of the files 43 subject to search. In addition, as with the index 1 creation program 11, this problem may be solved by shortening the intervals at which the index 2 creation program 12 performs processing, and so forth.

Further, there also arises the problem that when creation times differ between the index 1 file 21 and the index 2 file 22, the contents sometimes become discrepant between the index 1 file 21 and the index 2 file 22. One method for solving this problem would be to coordinate the index file creation process start times for the index 1 creation program 11 and the index 2 creation program 12. Specifically, for example, it may be arranged such that an index file creation process start request is transmitted to the index 1 creation program 11 immediately before the index 2 creation program 12 is to start an index file creation process, and the index 1 creation program 11 starts an index file creation process upon receiving this request.

Although the times at which each of the files 43 subject to search are referenced would not necessarily be coordinated even when the index file creation process start times are coordinated, a slight discrepancy in content between the index 1 file 21 and the index 2 file 22 would not pose a significant problem for their use in searches. Therefore, as long as the index file creation process start times are coordinated, for the most part, there would be no problem in practice.

However, in cases where there is a need for absolute prevention of all and any discrepancies in content between the index 1 file 21 and the index 2 file 22, it may be arranged such that, for example, with respect to the file server 4, a program that constantly monitors I/Os with respect to the files 43 subject to search is run, and each time the files 43 subject to search are updated, etc., information pertaining to the relevant files within the index 1 file 21 and the index 2 file 22 is updated.

The search program 13 is activated when the file search server 1 receives a search request from the client 3, and executes a file search. Specifically, one or both of the index 1 file21 and the index 2 file 22 is/are referenced to determine whether or not there exists a file that matches the conditional search expression of the search request. If it does exist, a search result comprising the file name, etc., of the matching file is transmitted to the client 3.

Here, if it is necessary to reference the index 1 file 21, the search program 13 transmits the conditional search expression to the index 1 search program 14. The index 1 search program 14 references the index 1 file 21, and determines whether or not there exists a file that matches the received conditional search expression. In other words, the index 1 search program 14 is a program that complements part of the search function of the search program 13. As will be discussed later, in Example 1, when the operator of the client 3 requests a so-called full-text search, a search by way of the index 1 search program 14 is performed. By separating the full-text search function from the function(s) of the search program 13 it self, it becomes possible to use, as the index 1 search program 14, various already existing full-text search programs. For example, it becomes possible to determine from the search request the purpose of the search, such as whether a search for documents in the field of social science is being requested or a search for documents in the field of natural science is being demanded, etc., and to perform by way of the index 1 search program 14 a full text-search that suits the purpose of the search.

The search program 13 has a function of creating a tree-like hierarchy by classifying the files 43 subject to search by document title, etc., as stored in the index 2 file 22 (hereinafter "virtual classification function"). In other words, it has a function of classifying index 2 records 220, and in performing virtual classification, it references the virtual class definition file 23 in which classification conditions, etc., are defined. Naturally, there would be a program that creates, updates, etc., the virtual class definition file 23. However, since it is not directly relevant to the present invention, a description will hereinafter be provided based on the assumption that the virtual class definition file 23 is already created.

In addition, the search program 13 has a function of creating a tree-like hierarchy by referencing the storage locations of the files 43 subject to search on the storage device 42 as stored in the index 2 file 22 (hereinafter "physical hierarchy creation function").

Further, the search program 13 has a function of searching for files associated with the search results (hereinafter "association search function"), and in performing an association search, it references the association definition file 24 in which association search conditions, etc., are defined. Naturally, there would be a program that creates, updates, etc., the association definition file 24. However, since it is not directly relevant to the present invention, a description will hereinafter be provided based on the assumption that the association definition file 24 is already created.

### <Configuration/Function of Each File>

Fig. 2 is a data structure diagram for the index 1 file 21 with respect to Example 1.

The index 1 file 21 comprises index 1 records 210 corresponding to the respective files 43 subject to search. In other words, each of the index 1 records 210 has one-to-one correspondence with each of the files 43 subject to search as of when the index 1 records 210 were created.

Each of the index 1 records 210 comprises various data items including a file name 211, a file path 212, access authority 213 and a keyword 214.

The file name 211 is set to the file name of the corresponding file 43 subject to search, e.g., "workreport1.doc".

The file path 212 is set to the absolute path of the corresponding file 43 subject to search, e.g., "//etc/usr1/workreport1.doc" (i.e., "workreport1.doc" within the "usr1" folder within the "etc" folder directly under the root). It is noted that it is possible to identify byway of the file path 212 the storage location of the file 43 subject to search on the storage device 42. However, if a plurality of storage devices 42 are connected to the file server4, identification information specifying a particular storage device 42, a logical volume name, etc., may also be set as part of the file path 212 or as data items separate from the file path 212. In addition, it is also possible to identify the storage location of the file 43 subject to search by way of information other than the absolute path of the file, e.g., a relative path relative to a predetermined file, or a logical block number where the file is stored. The index 1 records 210 may be provided with such data items in place of or in addition to the file path 212.

The access authority 213 is set to the access authority that is set with respect to the corresponding file 43 subject to search. Specifically, it is set to the access authority that is, for example, granted by the file management program 41, etc., of the file server 4 and stored as file attribute information (e.g., a three-digit value (e.g., 777, etc.) as used in UNIX (registered trademark), etc., representing authority to reference, update, or execute with respect to owners, groups, or other users).

The keyword 214 is set to a keyword(s) that is/are extracted from the contents of the corresponding file 43 subject to search. One or more keywords may be extracted through various parsing methods such as, for example, extracting "site" if several instances of the text string "site" are contained in the contents of the file 43 subject to search, and the keyword 214may be set thereto. In general, numerous words, etc., are stored in the keyword 214, and a large portion of the size of each of the index 1 records 210 is used for the keyword 214.

It is noted that besides the above, other file attribute information, such as file creator, etc., may also be included as data items of the index 1 records 210.

The index 1 records 210 (index information) thus created are referenced by the index 1 search program 14 as previously described.
Fig. 3 is a data structure diagram for the index 2 file 22 with respect to Example 1.

The index 2 file 22 comprises index 2 records 220 corresponding to the respective files 43 subject to search. In other words, each of the index 2 records 220 has one-to-one correspondence with each of the files 43 subject to search as of when the index 2 records 220 were created.

Each of the index 2 records 220 comprises system metadata 221, standard metadata 222 and user-defined metadata 223. The system metadata 221 is set by the index 2 creation program 12, and the user cannot directly modify the settings thereof. On the other hand, although the standard metadata 222 is set by the index 2 creation program 12, the user may directly modify the settings thereof using, although not shown in Fig. 1, a metadata modification program ofthe file search server 1. In addition, the user-defined metadata 223 is a data item for which the user defines the data structure and sets/modifies the data content.

The index 2 creation program 12 is not involved in the setting of the user-defined metadata 223.

Fig. 4 is a data structure diagram for the system metadata 221 with respect to Example 1.

The system metadata 221 comprises a file ID 221a, a file name 221b and a file path 221c.

Each of the file IDs 221a is set to an ID (identifier) with which the corresponding file 43 subject to search may be uniquely identified. Specifically, for example, it may be set to a serial number starting from 1 each time the index 2 record 220 for a new file 43 subject to search is created.

As with the file names 211 of the index 1 records 210, each of the file names 221b is set to the file name of the corresponding file 43 subject to search, e.g., "workreport1.doc".

As with the file paths 212 of the index 1 records 210, each of the file paths 221c is set to the absolute path of the corresponding file 43 subject to search, e.g., "//etc/usr1/workreport1.doc".

It is noted that besides the above, other file attribute information, such as file creator, access authority, etc., may also be included as data items of the system metadata 221.

Fig. 5 is a data structure diagram for the standard metadata 222 with respect to Example 1.

The standard metadata 222 comprises a title 222a, a document write date 222b and a security rank 222c.

The title 222a is set to the title of the document, etc., stored in the corresponding file 43 subject to search, as in, for example, "Work Report." Specifically, the index 2 creation program 12, for example, creates a display image for this file as it would appear if printed, assumes that the text string that would be printed at the top of the first page with a text size larger than the other text is the title of the document, etc., and sets the title 222a there to.

The document write date 222b is set to the date on which the document, etc., stored in the corresponding file 43 subject to search was written, as in, for example, "August 5, 2009." Specifically, the index 2 creation program 12, for example, assumes that, of the text stringsthat would be printed at the top of the first page if this file were to be printed out, a text string resembling a creation date, e.g., a text string containing the words "created," "January," "February," "March," etc., is the write date of the document, etc., and sets the document write date 222b thereto.

The security rank 222c is set to the confidentiality level of the document, etc., stored in the corresponding file 43 subject to search, as in, for example, "strictly confidential," "secret," etc. Specifically, the index 2 creation program 12, for example, extracts, from among the text strings contained in this file, a text string(s) that likely indicate(s) a need for confidentiality, e.g., "handle with care," "do not copy," etc., determines the confidentiality level from the content, quantity, etc., of the extracted text string(s), and sets the security rank 222c thereto.

It is noted that besides the above, other information identifiable from the display image for the file 43 subject to search as it would appear if printed, etc., such as the storage period, etc., of the document may also be included as data items of the standard metadata 222.

The index 2 records 220 (index information) thus created are referenced by the search program 13 as previously described.

Fig. 6 is a data structure diagram for the virtual class definition file 23 with respect to Example 1.

The virtual class definition file 23 comprises one or more virtual class definition records 230.

Each of the virtual class definition records 230 comprises data items including a virtual class ID 231, a display name 232, a condition 233 and an upper virtual class ID 234.

The virtual class ID 231 is set to a value with which that virtual class definition record 230 may be uniquely identified, e.g., "1," "2," etc.

The display name 232 is set to the name of that virtual class, e.g., "title," "work report, "etc.

The condition 233 is set to the classification condition for that virtual class, e.g., "no conditions," "includes (the text string) 'work report' in the title 222a," etc. If the classification condition is set to "no conditions," it signifies that there are no index 2 records 220 that would be classified in that virtual class. If the classification condition is set to some condition, it signifies that, of the index 2 records 220, those records that satisfy that condition would be classified in that virtual class. Thus, there may be cases where one index 2 record 220 would be classified in two or more virtual classes, as well as cases where it would not be classified in any virtual class.

As will be discussed later, the virtual class definition records 230 are referenced by the search program 13, and the display names 232, and the files names 221b of the index 2 records220 that satisfy the conditions 233 for those display names 232 are displayed on the display device 33 in a tree-like hierarchy. Thus, there may be cases where one index 2 record 220 would be displayed at two or more places in the tree, as well as cases where it would not be displayed anywhere in the tree.

The upper virtual class ID 234 is set to a value with which an upper virtual class definition record 230 to that virtual class definition record 230 may be uniquely identified, e.g., "0 (none above)," "1," etc.

For example, assuming a case where there are a virtual class definition record 230 in which the virtual class ID 231, the display name 232, the condition 233 and the upper virtual class ID 234 are respectively set to "1," "title," "no conditions" and "0 (none above)" and a virtual class definition record 230 in which they are respectively set to "2," "work report," "includes 'work report' in the title 222a," and "1," and where there are four index 2 records 220 whose titles 222a include "work report," their file names 221b respectively being "workreport1.doc", "workreport2.doc", "workreport3.doc" and "report.doc", then a tree-view wouldbe displayed on the display device 33 as if there were a folder named "work report" within a folder named "title," and as if the four files "workreport1.doc", "workreport2.doc", "workreport3.doc" and "report.doc" were contained within this folder named "work report" (see D1402 in Fig. 15).

Fig. 7 is a data structure diagram for the association definition file 24 with respect to Example 1.

The association definition file 24 comprises one or more association definition records 240.

Each of the association definition records 240 comprises data items including an association definition ID 241, a display name 242 and a condition 243.

The association definition ID 241 is set to a value with which that association definition record 240 may be uniquely identified, e.g., "1," "2," etc.
The display name 242 is set to the name of that association definition, e.g., "title," etc.

The condition 243 is set to the classification condition for that virtual class, e.g., "the title 222a is equal to the relevant search result," etc.

For example, assuming a case where there is an association definition record 240 in which the association definition ID 241, the display name 242 and the condition 243 are respectivelyset to "1," "title" and "the title 222a is equal to the instant search result," where there are four index 2 records 220 whose titles 222a include "work report," where their file names 221b respectively are "workreport1.doc", "workreport2.doc", "workreport3.doc" and "report.doc", and where "workreport1.doc" is displayed on the display device 33 as a search result, then the word "title" would also be displayed, and when the word "title" is clicked on, the three files "workreport2.doc", "workreport3.doc" and "report.doc" would be retrieved by association (see D1405 in Fig. 17 and Fig. 18).

It is noted that the condition 243 may be set to various conditions, such as, for example, '"copy∼' is prefixed to the file name of the retrieved file," "a number is suffixed to the end of the file name of the retrieved file," etc.

With the above, the description of the configuration/functions of a file search system of Example 1 is concluded. Hereinafter, operations of a file search system of Example 1 will be described with reference to the flowcharts for the various programs.

### <Operations of Various Programs>

Fig. 8 is a flowchart showing operations of the index 1 creation program 11 with respect to Example 1.

Once the process starts, the index 1 creation program 11 creates, etc., the index 1 records 210 for the files 43 subject to search (S801).

Specifically, for example, the file management program 41 is requested to read and transmit a file included in a pre-defined file path (e.g., "/etc/usrl/"). Then, if a file is received from the file management program 41, it is determined whether or not there exists an index 1 record 210 for which the file path 212 is set to the file path of the obtained file (e.g.,"/etc/usr1/workreport1.doc"). Then, if no such index 1 record 210 exists, a keyword(s) is/are extracted from the obtained file, and an index 1 record 210 is added by respectively setting its file name 211, file path 212, access authority 213 and keyword 214 to the file name,file path, access authority and extracted keyword of this file. On the other hand, if such an index 1 record 210 does exist, the access authority 213 and the keyword 214 of this index1 record 210 (hereinafter "record subject to update") are updated.

After the process above is executed for all files under a pre-defined file path, if there are any index 1 records 210 other than the newly created index 1 records 210 that did not become records subject to update, those index 1 records 210 are deleted.

It is noted that the method for creating, etc., the index 1 records 210 is not limited to the method described above. For example, once the process is started, the index 1 file 21 maybe deleted, the file management program 41 may be requested to read and transmit a file included in a pre-defined file path (e.g., "/etc/usr1/"), and an index 1 record 210 may be created for the received file.

As described above, in an embodiment of Example 1, each time the index 1 creation program 11 performs processing, index 1 records 210 that have one-to-one correspondence with the respective files 43 subject to search at the time of processing are created.

Fig. 9 is a flowchart showing operations of the index 2 creation program 12 with respect to Example 1.

Once the process starts, the index 2 creation program 12 creates, etc., the index 2 records 220 for the files 43 subject to search (S901). As the specific content of the process is similar to that of the index 1 creation program 11, only the points that differ will be explained below.

First, as previously described, the files 43 subject to search for the index 2 creation program 12 need not be the same as those for the index 1 creation program 11. For example, all files stored on the storage device 42 may be taken to be the files 43 subject to search for the index 1 creation program 11, while a portion of the files stored on the storage device 42 (e.g., only the files that the operator of the client 3 references regularly) are taken tobe the files 43 subject to search for the index 2 creation program 12. Through such an arrangement, it is possible to keep the number of files displayed as search results down by ordinarily searching only in the index 2 file 22 in the later-described search process, while on the other hand making it possible to display as search results files that are not ordinarily referenced by searching in the index 1 file 21 as required.

Conversely, a portion of the files stored on the storage device 42 (e.g., document files in which terms are used relatively strictly, such as research papers, court decisions, etc.) may be taken to be the files 43 subject to search for the index 1 creation program 11, while all files stored on the storage device 42 are taken to be the files 43 subject to search for the index 2 creation program 12. Through such an arrangement, the likelihood that terms, etc., used with their definitions left vague (where it is relatively likely that, even if these terms, etc., match search keywords and the relevant files are displayed as search results, the files would not be those which are sought) would be extracted as the keywords 214 of the index 1 records 210 decreases. Consequently, it is possible to keep the volume of the index1 file 21 relatively small, while at the same time increasing, when a full-text search by keyword is performed in the later-described search process, the likelihood that the desired files would be displayed as search results.

In addition, through the arrangement below, it is also possible to avoid unnecessary updatesof the index 2 records 220. For example, update date and time may be provided as a data item for the index 2 records 220, and each time an index 2 record 220 is created/updated, it may be set to the date and time at which that process was performed. When the index 2 creation program 12 tries to update an index 2 record 220, the update date and time of the index 2 record 220 and the update date and time of the file 43 subject to search (which is generally set by the file management program 41 as one item of file attribute information) may be compared with each other, and if the update date and time of the file 43 subject to search is more recent, since there is a possibility that the content of that file 43 subject to search has been modified after the index 2 record 220 was created, it is taken to be subject to update. In addition, if access authority is provided as a data item for the index 2 records 220, when the index 2 creation program 12 tries to update an index 2 record 220, the access authority of the index 2 record 220 and the access authority of the file 43 subject to search may be compared with each other, and it may be taken to be subject to update if they differ.

Further, in updating an index 2 record 220, the index 2 creation program 12 determines whether or not the settings of the standard metadata 222 have been directly modified using the previously-mentioned metadata modification program, and if they have been directly modified, the standard metadata 222 is not updated. In order to do this, for example, "direct modification status" may be provided as a data item for the metadata 222, and be set to "no direct modification" upon creation of an index 2 record 220, and then be set to "directly modified" in the event of direct modification via the metadata modification program. It is noted that the index 2 creation program 12 does not update the user-defined metadata 223.
"File update status after direct modification" may further be provided as a data item for the standard metadata 222, and be set to "no updates" upon creation of an index 2 record 220 by the index 2 creation program 12. When the index 2 creation program 12 updates an index 2 record 220, it is determined whether or not this index 2 record 220 has been directly modified using the metadata modification program, and if it has been directly modified and if the content of the corresponding file 43 subject to search has been modified, "file update status after direct modification" may be set to "updated."
Thus, when the operator of the client 3 references this index 2 record 220 using the metadata modification program, or in displaying the file search results as described later, it is possible to notify that the contents of the files displayed on the display device 33 have been updated after direct modification of the standard metadata 222, and the operator of the client 3 is able to determine whether or not it is necessary to perform direct modification ofthe standard metadata 222 again.

As described above, in an embodiment of Example 1, index 2 records 220 having one-to-one correspondence with the respective files 43 subject to search at the time of processing are created every time the index 2 creation program 12 performs processing.

Fig. 10 is a flowchart showing operations of the search request program 31 with respect to Example 1.

The search request program 31 is activated by the operator of the client 3 using the input device 32.

Once activated, the search request program 31 performs a log-in process (S1001). Specifically, a log-in screen such as that shown in Fig. 13 is displayed on the display device 33, the operator of the client 3 inputs his/her user ID and a password using the input device 32 and presses the "submit" button, upon which it is determined whether or not the inputted user ID and password are valid. It is noted that such a log-in process in itself is a well-known technique, and no further description will therefore be provided.

If it is determined that the inputted user ID and password are valid, the search request program 31 displays a search request screen on the display device 33 (S1002).

A display example of a search request screen (D1401) is shown in Fig. 14. In Fig. 14, the search request screen comprises a virtual class display portion (D1402), a physical folder display portion (D1403), a search condition portion (D1404), a search result portion (D1405) and "search," "edit metadata," and "finish" buttons.

In displaying the search request screen, the search request program 31 uses the virtual classification function of the search program 13 to display the virtual class display portion (D1402). Specifically, the search request program 31 requests the search program 13 to transmit initial display contents for the virtual classes. The search program 13 transmits to the search request program 31 the display names 232 of, of the virtual class definition records 230, the records for which the upper virtual class ID 234 is set to "0 (none above)" (i.e., the uppermost virtual class definition records 230). The search request program 31 displays the received display names in the virtual class display portion (D1402). In addition, the search request program 31 displays before each of the display names 232 graphics in which a "+" sign is enclosed by a square. As will be described later, by performing such operations as clicking on these graphics with a mouse, etc., the operator of the client 3 is able to display other virtual classes and files included under these virtual classes.

For example, a case is assumed where there are a virtual class definition record 230 whose virtual class ID 231, display name 232, condition 233 and upper virtual class ID 234 are respectively set to "1," "title," "no conditions" and "0 (none above)" and a virtual class definition record 230 likewise respectively set to "2," "work report," "contains 'work report' in the title 222a" and "1," and where there are four index 2 records 220 whose titles 222a contain "work report," their respective file names 221b being "workreport1.doc", "workreport2.doc", "workreport3.doc" and "report.doc". When the graphics in which a "+" sign is enclosed by a square that are displayed before "Title" in the virtual class display portion (D1402) are clicked on, although not shown in the drawing, a tree-view is displayed where it is as if a folder named "Work report" is contained within a folder named "Title." Further, when the graphics in which a "+" sign is enclosed by a square that are displayed before "Work report"are clicked on, a tree-view is displayed where it is as if, as shown in the virtual class display portion (D1402) in Fig. 15, the folder named "Work report" exists within the folder named "Title" and as if four files, namely, "workreport1.doc", "workreport2.doc", "workreport3.doc" and "report.doc", are contained within this folder named "Work report."
In addition, in displaying the search request screen, the search request program 31 uses the physical hierarchy creation function of the search program 13 to display the physical folderdisplay portion (D1403). Specifically, the search request program 31 requests the search program 13 to transmit initial display contents for the physical folders. The search program 13 creates a tree-like hierarchy of folders by referencing the files paths 221c of the index2 records 220, and transmits to the search request program 31 the names of the folders at the uppermost level of the tree. The search request program 31 displays the received folder names in the physical folder display portion (D1403). In addition, the search request program 31 displays before each folder name graphics in which a "+" sign is enclosed by a square. By performing such operations as clicking on these graphics with a mouse, etc., the operator of the client 3 is able to display other folders and files contained in these folders.

It is noted that the displayed contents of the search condition portion (D1404) and the search result portion (D1405) are as shown in Fig. 14, and no search results are displayed in the search result portion (D1405).

The operator of the client 3 uses the input device 32 to input the various items in the search condition portion (D1404). The items inputted in the search condition portion (D1404) become search conditions. For example, if "site" is inputted under "Full text" and "work report" under "Title," files whose keywords 214 in the index 1 records 210 are set to "site" and whose titles 222a in the index 2 records 220 are set to "work report" would be searched for,and search results would be scrollably displayed in the search result portion (D1405).

With respect to the various items in the search condition portion (D1404), by allowing various input methods, it is possible to improve the ease of search. For example, logical expression inputs may be allowed under "Full text," e.g., "NOT site," "site AND work, "etc. It isnoted that the input items in the search condition portion (D1404) need not by any means be limited to the items shown in the drawings, and may be decided upon in accordance with the data items in the index 1 file 21 and the index 2 file 22, e.g., access authority, security rank, etc.

After the search request screen is displayed (S1002), the search request program 31 waits for the search button, the edit metadata button or the finish button to be pressed (S1003, S1004). When the search button is pressed, that is, when a search request is detected (YES in S1003), a search process (S1005, S1006, S1007) is performed. In addition, when the finish button is pressed, that is, when a finish request is detected (YES in S1004), the process is terminated.

It is noted that, although not shown in Fig. 10, the search request program 31 performs a metadata edit process when the edit metadata button is pressed. Specifically, it requests the operator of the client 3 to specify the file that is to be edited, displays the current settings for the standard metadata 222 and the user-defined metadata 223 of the specified file, and modifies the settings for the standard metadata 222 and the user-defined metadata 223 with what is inputted by the operator of the client 3. In so doing, as previously described, if the file update status after direct modification in the standard metadata 222 is set to "updated," a message to that effect may be displayed on the display device 33.

When a search request is detected, the search request program 31 transmits to the search program 13 the inputted content (search condition) of the search condition portion (D1404) (S1005). For example, if "site" is inputted under "Full text," and "work report" under "Title,"a conditional search expression, such as "full text = site, title = work report", is created and transmitted to the search program 13 along with the user ID that was inputted through the log-in screen. Here, the conditional search expression is an expression that is interpreted by the search program 13, and may be created in accordance with syntax rules, etc., that allow for interpretation by the search program 13.

After the conditional search expression is transmitted to the search program 13, the search request program 31 waits until a search result is received from the search program 13 (S1006). Upon receiving a search result, the search request program 31 displays the search resulton the search request screen in the search result portion (D1405) (S1007), and again waits for the search button, etc., to be pressed (S1003, S1004).

Fig. 11 is a flowchart showing operations of the search program 13 with respect to Example 1.

The search program 13 is activated by the file search server 1 when the file search server 1 receives a search request from the client 3.

The search program 13 first analyzes the conditional search expression contained in the search request to determine whether or not it is necessary to perform a metadata search, that is, to perform a search by referencing the system metadata 221, etc., in the index 2 file 22 (S1101). For example, if the conditional search expression is "full text = site, title = work report," it is determined that it is necessary to perform a search by referencing the titles 222a of the system metadata 222.

If it is determined that a metadata search is to be performed (YES in S1101), the search program 13 performs a search based on the index 2 file 22 (S1102). Specifically, a condition pertaining to the system metadata 221, etc., is extracted from the conditional search expression, and index 2 records 220 that match with the condition are selected (hereinafter "metadata matching records").

For example, if the conditional search expression is "full text = site, title = work report," index 2 records 220 whose titles 222a in the standard metadata 222 are set to "work report" are selected.

After a metadata search is performed (S1102) or if it is determined that no metadata search is to be performed (NO in S1101), the search program 13 determines whether or not it is necessary to perform a full-text search, that is, to perform a search by referencing the keywords 214 in the index 1 file 21 (S1103). For example, if the conditional search expression is "full text = site, title = work report," it is determined that it is necessary to perform a search by referencing the keywords 214.

If it is determined that a full-text search is to be performed (YES in S1103), the search program 13 performs a full-text search based on the index 1 file 21 (S1104). Specifically, a full-text search condition is extracted from the conditional search expression and is transmitted to the index 1 search program 14 along with the file paths 221c of the metadata matching records as well as the user ID received from the search request program 31. As will be described later, the index 1 search program 14 performs a search by referencing the received full-text search condition, etc., and transmits to the search program 13 the file paths 221cof the index 1 records 210 that should ultimately be taken to be search results (herein after "keyword matching records").

If it is determined that no full-text search is to be performed (NO in S1103), the search program 13 takes the metadata matching records to be subject to transmission to the search request program 31, whereas if a full-text search has been executed (S1104), it takes the keyword matching records to be subject to transmission to the search request program 31. The search program 13 transmits to the search request program 31 each data item of the index 2 records 220 that have been taken to be subject to transmission (S1105).
After transmission, the search program 13 terminates the process.

Fig. 12 is a flowchart showing operations of the index 1 search program 14 with respect to Example 1.

he index 1 search program 14 searches among the index 1 records 210 of the metadata matching records (S1201). Specifically, with respect to all of the file paths 221c of the metadatamatching records received from the search program 13, the index 1 records 210 for which the files paths 212 are respectively set to identical values are referenced, and it is determined, based on the access authority 213 of the relevant records, whether or not the user ID received from the search program 13 has access authority. Further, if it is determined that itdoes have access authority, it is determined whether or not the keywords 214 of the relevant records satisfy the full-text search condition received from the search program 13.

The index 1 search program 14 transmits to the search program 13 the file paths 221c that satisfy the conditions above (S1202), and terminates the process.

Incidentally, if various already existing full-text search programs are to be used as the index 1 search program 14, programs corresponding to those index 1 search programs 14 would also have to be used for the index 1 creation program 11. In that case, in general, the files43 subject to search related to the index 1 file 21 would differ from the files 43 subject to search related to the index 2 file 22. As such, even if, for example, the files 43 subject to search related to the index 2 file 22 were set to files that are frequently used by the operator of the client 3, should the operator of the client 3 request only a full-text search, since a search would be performed in the index 1 file 21, files that are not frequently used would also end up being displayed as search results.

Although there may be cases where such a search might be preferred, there are also cases where this is not so. As such, if only a full-text search is to be performed, it may be made possible to specify via the search request screen whether only the files 43 subject to search for which the index 2 file 22 is created are to be taken to be subject to search (i.e., only the files for which metadata has already been created are to be taken to be subject to search), or all of the files 43 subject to search of the index 1 file 21 are to be taken to be subject to search irrespective of the index 2 file 22 (i.e., files for which no metadata has been created yet, too, are to be taken to be subject to search).

When so arranged, if it is specified that files for which no metadata has been created yet, too, are to be taken to be subject to search, the index 1 search program 14 operates as described above. On the other hand, if it is specified that only files for which metadata has already been created are to be taken to be subject to search, the index 1 search program 14 selects, even if no metadata search is requested (NO in S1101 in Fig. 11), all of the index 2 records 220 of the index 2 file 22 as metadata matching records, and transmits to the index 1 search program 14 the file paths 221c of these records along with the full-text search condition and the user ID received from the search request program 3 1.

### <Additional Description with Respect to Processing in Cases where both a Metadata Search anda Full-Text Search are Performed>

As described above, with a file search system of Example 1, a search is performed using the index 1 file 21 only when the operator of the client 3 requests a full-text search. Incidentally, as compared to cases where a full-text search is not performed, the processing time taken for a full-text search is generally longer. Therefore, the waiting time from when the operator of the client 3 requests a search up to when a search result is displayed becomes longer. As such, it is preferable that the operator of the client 3 be prevented from havingto wait for unexpectedly long periods.

A description is provided below with respect to operations of the search program 13, etc., when such measures are effected in cases where both a metadata search and a full-text search are performed (hereinafter "compound search").

Fig. 16 is a flowchart showing operations of the search program 13, etc., in a compound search with respect to Example 1.

S1650 through S1655 in Fig. 16 show details of a process performed by the search program 13 in S1104 and S1105 in Fig. 11 during a compound search. S1601 through S1607 show details ofa process performed by the search request program 31 in S1006 and S1007 in Fig. 10 in correspondence with this process.

The search program 13 compares the number of search results, that is, the number of metadatamatching records retrieved through a metadata search, with a pre-defined number (hereinafter"maximum retrieval number") (S1650).

Then, if the number of metadata matching records, that is, the number of records subject to a full-text search, is greater than the maximum retrieval number (YES in S1650), a message for confirming whether or not to continue the process is transmitted to the search request program 31 (S1651), and it is waited for until a confirmation result as to whether or not the search process is to be continued is received from the search request program 31 (S1652).

Upon receiving from the search program 13 the message for confirming whether or not to continue the search process, the search request program 31 displays this message on the display device 33 and requests the operator of the client 3 to respond as to whether or not the search process is to be continued (S1601). Specifically, for example, a confirmation message as well as "continue search" and "cancel" buttons may be displayed through a pop-up dialog box,and it may be waited for until one of the buttons is clicked on.

If the operator of the client 3 instructs to cancel the search by clicking on the "cancel" button, etc. (NO in S1602), the search request program 31 transmits a "cancel search" instruction to the search program 13 and terminates the process (S1603). Thus, the search request program 31 does not display any search results and waits again for the search button, etc., to be pressed on the search request screen (S1003 and S1004 in Fig. 10).

If the operator of the client 3 instructs to continue the search by clicking on the "continue search" button, etc. (YES in S1602), the search request program 31 transmits a "continue search" instruction to the search program 13 and, although not shown explicitly in the diagram, waits until a search result is received from the search program 13.

Upon receiving from the search request program 31a "cancel search" instruction or a "continue search" instruction, the search program 13 changes the process depending on the received instruction (S1652). Specifically, the process is terminated if a "cancel search" instruction is received (NO in S1652), whereas if a "continue search" instruction is received (YES inS1652), a full-text search is caused to be executed by transmitting to the index 1 search program 14 the file paths 221c of, from among the metadata matching records, a maximum retrieval number's worth of records, the full-text search condition, and the user ID received from the search request program 31 (S1653).

It is noted that if the number of records subject to a full-text search is equal to or less than the maximum retrieval number (NO in S1650), a message for confirming whether or not to continue the process is not transmitted to the search request program 31, and a full-text search is caused to be executed by transmitting to the index 1 search program 14 the file paths 221c of the metadata matching records, the full-text search condition, and the user ID received from the search request program 31 (S1653).

Once the full-text search ends, the search program 13 transmits to the search request program 31 each data item of the keyword matching records (S1654). In so doing, identification isalso transmitted as to whether a full-text search has been executed with respect to all of the metadata matching records or there remain metadata matching records for which a full-text search has not been executed.

Next, the search program 13 determines whether or not additional display is possible in the search result portion (D1405) (S1655). Specifically, if there remain among the metadata matching records for which a full-text search has not been executed and if the cumulative total value of search results transmitted to the search request program 31 is less than a number pre-defined as a displayable number in the search result portion (D1405) on the search request screen (D1401) (hereinafter "maximum display number") (Yes in S1655), it is again waited for until a confirmation result as to whether or not the search process is to be continued isreceived from the search request program 31 (S1652). On the other hand, if additional display in the search result portion (D1405) is not possible (NO in S1655), the search program 13 terminates the process.

Upon receiving a search result from the search program 13, the search request program 31 displays the search result in the search result portion (D1405). It is noted that, as described above, as long as additional display in the search result portion (D1405) is possible, full-text searches with respect to the metadata matching records are repeatedly executed. Thus, search results are additionally displayed in the search result portion (D1405). For example, if the result of the first full-text search includes three hits and the search result ofthe second full-text search includes four hits, a search result of seven hits is displayed in the search result portion (D1405).

Next, the search request program 31 determines whether or not there remain any metadata matching records for which a full-text search has not been executed (as previously described, identification is transmitted from the search program 13 as to whether a full-text search has been executed with respect to all of the metadata matching records or there remain metadata matching records for which a full-text search has not been executed) and whether or not additional display in the search result portion (D1405) is possible (S1606). If there remain metadata matching records for which a full-text search has not been executed and additional display in the search result portion (D1405) is possible (YES in S1606), a message for confirming whether or not to continue the process is displayed on the display device 33 (S1607), and the operator of the client 3 is again requested to respond as to whether or not the search process is to be continued (S1602).

On the other hand, if a full-text search has been executed with respect to all of the metadata matching records or if additional display in the search result portion (D1405) is not possible (NO in S1606), the search request program 31 terminates the process (S1603). Thus, the search request program 31 displays in the search result portion (D1405) the search resultsup to that point and again waits for the search button, etc., to be pressed (S1003 and S1004 in Fig. 10).

Thus, when the number of records that are subject to a full-text search is greater than the maximum retrieval number, the operator of the client 3 is asked whether or not the search process is to be continued, and a full-text search is performed if "continue search" is instructed. Therefore, if search time is suspected to be long, the operator of the client 3 may cancel the search process for the time being and, for example, perform a search by further refining the metadata search condition.

In addition, full-text searches are repeatedly performed per unit of maximum retrieval number, and search results are additionally displayed each time a full-text search is performed. Thus, the operator of the client 3 is able to successively check search results in a relatively short period of time.

### <Additional Description Pertaining to Association Search>

Fig. 17 is a diagram showing an example of contents displayed in the search result portion (D1405) with respect to Example 1. In Fig. 17, files names and file paths are displayed. However, other data items of the index 2 records 220, etc., may also be displayed such as titles, document write dates, etc. It is also possible, for example, to set in the index 2 records 220 a portion of the content of each of the files 43 subject to search, and have this bedisplayed.

In addition, in an association search instruction portion (D1701) enclosed by broken lines in Fig. 17, there are displayed names that the display names 242 of the association definition records 240 are set to. In the example in Fig. 17, there exist association definition records 240 for which the display names 242 are respectively set to "title" and "write date," and these display names 242 are displayed.

Under these circumstances, when the operator of the client 3 clicks on, for example, the portion that displays "title," the search request program 31 requests the search program 13 to perform an association search relating to "title." Specifically, the file IDs 221a relatingto the files of the search results that are not displayed on the display device 33 but were received from the search program 13 along with the search results, as well as the association definition IDs 241 relating to "title," are transmitted to the search program 13 along with the association search request.

Upon receiving the association search request, the search program 13 references the conditions 243 of the association definition records 240 that are set to the received association definition IDs 241, searches among the index 2 records 220 in accordance with the conditions that the conditions 243 are set to, and transmits the search result to the search request program 31.

For example, assuming a case where there exists an association definition record 240 for which the association definition ID 241, the display name 242 and the condition 243 are respectively set to "1," "title" and "title 222a is equal to the relevant search result," where there are four index 2 records 220 which contain "work report" in their titles 222a, where their respective file names 221b are "workreport1.doc", "workreport2.doc", "workreport3.doc" and "report.doc", and where "workreport1.doc" is displayed on the display device 33 as a search result, the word "title" would be displayed in the association search instruction portion (D1701). When the operator of the client 3 clicks on the word "title," the search request program 31 transmits to the search program 13 the file ID of "workreport1.doc" and the association definition ID ("1"). Then, the search program 13 references the condition 243 of the association definition record 240 whose association definition ID 241. is "1," and since it is set to "title 222a is equal to the instant search result," the search program 1.3 obtains the title 222a of "workreport1.doc" based on the received file ID, retrieves three files that contain, as does "workreport1.doc", "work report" in their titles 222a, namely, "workreport2.doc", "workreport3.doc" and "report.doc", and transmits the search result to the search request program 31. Then, as shown in Fig. 18, the search request program 31 displays the association search result in the search result portion (D1405).

It is noted that it is also possible to not place any particular restriction on the number of hits that may be displayed for the association search result, and it is also possible to, for example, display only a maximum of five hits, and should the result exceed five hits, display it on a separate screen.

A file search system according to the present invention is by no means limited to Example 1 mentioned above, and may be embodied in various forms. One such example is described below.

### Example 2

### <Another Embodiment of File Search System>

Fig. 19 is a system configuration diagram of a file search system of Example 2 according to the present invention.

In Example 2, unlike Example 1, the file search server I does not comprise the index 1 creation program 11 and the index 1 search program 14.

Instead, a file search server 5 (corresponding to the above-mentioned second file search server), which is a device such as a PC, etc., is communicably connected with the client 3, the file server 4, the web server 7 and the file search server 1 via the communications line 9. The file search server 5 comprises the index 1 creation program 11 and the index 1 search program 14. In addition, the index 1 file 21 is not stored on the storage device 2 of the file search server 1, but is stored on a storage device 6 of the file search server 5.

Significant differences in configuration between Example 2 and Example 1 are as described above.

In a file search system of Example 2, by means of the communications line 9, the client 3, the file server 4, the web server 7, the file search server 1 and the file search server 5 are communicably interconnected via the Internet. Through such a configuration, for example, if a given organization has files stored on the file server 4 that is set up at a data center, by creating an index 2 file 22, a virtual class definition file 23 and an association definition file 24 with respect to files 43 subject to search that are stored on the file server 4, it is made possible to perform a metadata search, virtual class display, physical folder display and an association search. Further, with respect to files 73 subject to search that are stored on a storage device 72 of the web server 7 that this organization does not manage, the index 1 creation program 11 of the file search server 5 may create the index 1 file 21 via a web server program 71 such as, for example, Apache (registered trademark), etc., through what is commonly known as web crawling, thereby making full-text searches possible.

In addition, with respect to Example 2, the file search server 5 need not be set up in an organization that is to perform a file search, and a full-text search etc., can be performed using the functions of existing file search servers. Thus, it is possible to build a search system that is highly flexible and expandable.

### Reference Signs List

- 1,5: File search server
- 3: Client
- 4: File server
- 7: Web server
- 9: Communications line
- 21: Index 1 file
- 22: Index 2 file
- 42, 72: Storage device
- 43, 73: File subject to search
- 210: Index I record
- 211, 221b: File name
- 212, 221c: File path
- 213: Access authority
- 214: Keyword
- 220: Index 2 record
- 221: System metadata
- 222: Standard metadata
- 223: User-defined metadata

## Claims

1. A file search system in which first and second file search servers (5, 1), a file server (4) and a client (3) are communicably interconnected via a wired or wireless communications line (9), the first file search server (5) comprising:
index 1 creation means (11) adapted to create, from files subject to search on a storage device (42) connected to the file server (4), and store in an index 1 file (21) index 1 records (210) including at least file names (211, 221b), file paths (212, 221C), access authority (213) and keywords (214);
wherein the second file search server (1) comprises:
index 2 creation means adapted to create, from files subject to search, and store in an index 2 file index 2 records (220) comprising system metadata (221) including at least file names (211, 221b) and file paths (212, 221c), standard metadata (222) and user-defined metadata (223);
means adapted to analyze, upon receiving a search request from the client (3), a conditional search expression included in the search request, and adapted to determine whether or not to perform a metadata search based on the conditional search expression;
metadata search means adapted to select, if it is determined that a metadata search is to be performed and from the index 2 records (220) of the index 2 file, metadata matching records that match a condition based on the conditional search expression;
means adapted to determine, after a metadata search is performed or if it is determined that no metadata search is to be performed, whether or not to perform a full-text search, the full-text search being based on the conditional search expression;
full-text search means adapted to perform a full-text search with respect to the index 1 file (21), if it is determined that a full-text search is to be performed, by referencing the keywords (214) based on the conditional search expression and the metadata matching records;
means adapted to transmit to the client (3), if a full-text search is executed, each data item of an index 1 record (210) that is a keyword matching record that is retrieved, and to transmit to the client (3), if it is determined that no full-text search is to be performed, the metadata matching records;
**characterized by**: means adapted to compare a number of metadata matching records retrieved through the metadata search with a pre-defined number in cases where both the metadata search and the full-text search are to be performed; and
means for receiving a confirmation result from the client (3) as to whether or not the full-text search is to be executed, in cases where the number of records in the metadata matching record is larger than the pre-defined number; and
wherein said first and second file search servers (5, 1) are either the same file search server or two different communicably interconnected file search servers.

2. The file search system according to claim 1, wherein the first file search server (5) comprises:
index 1 search means adapted to search in the index 1 file (21); and
wherein the second file search server (5) comprises other search means adapted to perform another search, wherein the other search means comprises:
means adapted to extract, if it is determined that a full-text search is to be performed, a full-text search condition from the conditional search expression; and
means adapted to transmit to the index 1 search means the extracted full-text search condition along with the file paths (221c) of the metadata matching records and a user ID received from the client (3), and the index 1 search means comprises:
means adapted to reference, upon receiving from the other search means the full-text search condition along with the file paths (221c) of the metadata matching records and the user ID, the index 1 records (210) whose file paths are set to identical values with respect to all received file paths (221c) of the metadata matching records to determine whether or not the received user ID has access authority (213) based on the access authority (213) of these records; and
means adapted to determine, if it is determined that access authority (213) is present, whether or not the keywords (214) of these records satisfy the full-text search condition.

3. The file search system according to claim 2, further comprising a web server (7) communicably connected to the communications line (9) via the Internet, wherein the index 1 creation means comprises means adapted to create, with respect to files subject to search stored on a storage device (72) of the web server (7), the index 1 file (21) through web crawling, and the index 1 search means comprises means adapted to search in the index 1 file (21) created by the index 1 creation means.

4. A computer program product comprising instructions which, when executed by a file search system in which a first file search server (5), a second file search server (1), a file server (4) and a client (3) are communicably interconnected via a wired or wireless communications line (9), cause the first file search server (5) to execute:
an index 1 creation function adapted to create, from files subject to search on a storage device (42) connected to the file server (4), and store in an index 1 file (21) index 1 records (210) including at least file names (211, 221b), file paths (212, 221c), access authority (213) and keywords (214);
and cause the second file search server (1) to execute:
an index 2 creation function adapted to create, from files subject to search, and store in an index 2 file index 2 records (220) comprising system metadata (221) including at least file names (211, 221b) and file paths (212, 221C), standard metadata (222) and user-defined metadata (223);
a function adapted to analyze, upon receiving a search request from the client (3), a conditional search expression included in the search request, and adapted to determine whether or not to perform a metadata search based on the conditional search expression;
a metadata search function adapted to select, if it is determined that a metadata search is to be performed and from the index 2 records (220) of the index 2 file, metadata matching records that match a condition based on the conditional search expression;
a function adapted to determine, after a metadata search is performed or if it is determined that no metadata search is to be performed, whether or not to perform a full-text search, the full-text search being based on the conditional search expression;
a full-text search function adapted to perform a full-text search with respect to the index 1 file (21), if it is determined that a full-text search is to be performed, by referencing the keywords (214) based on the conditional search expression and the metadata matching records;
a function adapted to transmit to the client (3), if a full-text search is executed, each data item of an index 1 record (210) that is a keyword matching record that is retrieved, and to transmit to the client (3), if it is determined that no full-text search is to be performed, the metadata matching records;
compare a number of metadata matching records retrieved through the metadata search with a pre-defined number in cases where both the metadata search and the full-text search are to be performed; and
receive a confirmation result from the client (3) as to whether or not the full-text search is to be executed, in cases where the number of records in the metadata matching record is larger than the pre-defined number;
wherein said first and second file search servers (5, 1) are either the same file search server or two different communicably interconnected file search servers.

5. The computer program product according to claim 4, wherein the first file search server (5) is further caused to execute:
an index 1 search function adapted to search in the index 1 file (21); and
wherein the second file search server (1) is further caused to execute another search function adapted to perform another search, wherein the other search function causes the second file search server (1) to execute:
a function adapted to extract, if it is determined that a full-text search is to be performed, a full-text search condition from the conditional search expression; and
a function adapted to transmit to the index 1 search function the extracted full-text search condition along with the file paths (221c) of the metadata matching records and a user ID received from the client (3), and wherein the index 1 search function causes the first file search server (5) to execute:
a function adapted to reference, upon receiving from the other search function the full-text search condition along with the file paths (221c) of the metadata matching records and the user ID, the index 1 records (210) whose file paths are set to identical values with respect to all received file paths (221c) of the metadata matching records to determine whether or not the received user ID has access authority (213) based on the access authority (213) of these records; and
a function adapted to determine, if it is determined that access authority (213) is present, whether or not the keywords (214) of these records satisfy the full-text search condition.

6. The computer program product according to claim 5, wherein the file search system further comprises a web server (7) communicably connected to the communications line (9) via the Internet, wherein the index 1 creation function causes the first file search server (5) to execute a function adapted to create, with respect to files subject to search stored on a storage device (72) of the web server (7), the index 1 file (21) through web crawling, and the index 1 search function causes the first file search server (5) to execute a function adapted to search in the index 1 file (21) created by the index 1 creation function.

## Patentansprüche

1. Dateisuchsystem, in dem ein erster und ein zweiter Dateisuchserver (5, 1), ein Dateiserver (4) und ein Client (3) über eine drahtgebundene oder drahtlose Kommunikationsleitung (9) kommunikationsfähig miteinander verbunden sind, wobei der erste Dateisuchserver (5) Folgendes umfasst:
Index-1-Erzeugungsmittel (11), die dazu eingerichtet sind, Index-1-Datensätze (210) aus suchbaren Dateien, die auf einer mit dem Dateiserver (4) verbundenen Speichervorrichtung (42) gespeichert sind, zu erstellen und in einer Index-1-Datei (21) zu speichern, wobei die Index-1-Datensätze mindestens Dateinamen (211, 221b), Dateipfade (212, 221C), Zugriffsrechte (213) und Schlüsselwörter (214) enthalten;
wobei der zweite Dateisuchserver (1) Folgendes umfasst:
Index-2-Erzeugungsmittel, die dazu eingerichtet sind, Index-2-Datensätze (220) aus suchbaren Dateien zu erstellen und in einer Index-2-Datei zu speichern, wobei die Index-2-Datensätze (220) System-Metadaten (221) umfassen, die mindestens Dateinamen (211, 221b) und Dateipfade (212, 221c), Standard-Metadaten (222) und benutzerdefinierte Metadaten (223) enthalten;
Mittel, die dazu eingerichtet sind, einen in der Suchanfrage enthaltenen bedingten Suchausdruck beim Empfangen einer Suchanfrage von dem Client (3) zu analysieren, und die dazu eingerichtet sind, basierend auf dem bedingten Suchausdruck zu bestimmen, ob eine Metadatensuche durchgeführt werden soll oder nicht;
Metadatensuchmittel, die dazu eingerichtet sind, Metadatenabgleichsdatensätzen unter den Index-2-Datensätzen (220) der Index-2-Datei auszuwählen, die einer Bedingung entsprechen, die auf dem bedingten Suchausdruck basiert, wenn bestimmt wird, dass eine Metadatensuche durchgeführt werden soll;
Mittel, die dazu eingerichtet sind, nach Durchführung einer Metadatensuche oder wenn bestimmt wird, dass keine Metadatensuche durchgeführt werden soll, zu bestimmen, ob eine Volltextsuche durchgeführt werden soll oder nicht, wobei die Volltextsuche auf dem bedingten Suchausdruck basiert;
Volltextsuchmittel, die dazu eingerichtet sind, eine Volltextsuche in Bezug auf die Index-i-Datei (21) durch Referenzieren der Schlüsselwörter (214) basierend auf dem bedingten Suchausdruck und den Metadatenabgleichsdatensätzen durchzuführen, wenn bestimmt wird, dass eine Volltextsuche durchgeführt werden soll;
Mittel, die dazu eingerichtet sind, jedes Datenelement eines Index-1-Datensatzes (210), der ein abgerufener Schlüsselwortabgleichsdatensatz ist, an den Client (3) zu übertragen, wenn eine Volltextsuche durchgeführt wird, und die Metadatenabgleichsdatensätze an den Client (3) zu übertragen, wenn bestimmt wird, dass keine Volltextsuche durchgeführt werden soll;
**gekennzeichnet durch**:
Mittel, die dazu eingerichtet sind, eine Anzahl von durch die Metadatensuche abgerufenen Metadatenabgleichsdatensätzen mit einer vorbestimmten Zahl in Fällen zu vergleichen, in denen sowohl die Metadatensuche als auch die Volltextsuche durchgeführt werden soll; und
Mittel zum Empfangen eines Bestätigungsergebnisses von dem Client (3), ob die Volltextsuche ausgeführt werden soll oder nicht, in Fällen, in denen die Anzahl der Datensätze in dem Metadatenabgleichsdatensatz größer als die vorbestimmte Zahl ist; und
wobei der erste und der zweite Dateisuchserver (5, 1) entweder der gleiche Dateisuchserver oder zwei verschiedene, kommunikationsfähig miteinander verbundene Dateisuchserver sind.

2. Dateisuchsystem nach Anspruch 1, wobei der erste Dateisuchserver (5) Folgendes umfasst:
Index-1-Suchmittel, die dazu eingerichtet sind, in der Index-1-Datei (21) zu suchen; und
wobei der zweite Dateisuchserver (5) andere Suchmittel umfasst, die dazu eingerichtet sind, eine weitere Suche durchzuführen, wobei die anderen Suchmittel Folgendes umfassen:
Mittel, die dazu eingerichtet sind, eine Volltextsuchbedingung aus dem bedingten Suchausdruck zu extrahieren, wenn bestimmt wird, dass eine Volltextsuche durchgeführt werden soll; und
Mittel, die dazu eingerichtet sind, die extrahierte Volltextsuchbedingung zusammen mit den Dateipfaden (221c) der Metadatenabgleichsdatensätze und einer vom Client (3) empfangenen Benutzer-ID an die Index-1-Suchmittel zu übertragen, wobei die Index-1-Suchmittel Folgendes umfassen:
Mittel, die dazu eingerichtet sind, diejenigen Index-1-Datensätze (210) beim Empfangen der Volltextsuchbedingung zusammen mit den Dateipfaden (221c) der Metadatenabgleichsdatensätze und der Benutzer-ID von den anderen Suchmitteln zu referenzieren, deren Dateipfade in Bezug auf alle empfangenen Dateipfade (221c) der Metadatenabgleichsdatensätze auf identische Werte eingestellt sind, um basierend auf der Zugriffsberechtigung (213) dieser Datensätze festzustellen, ob die empfangene Benutzer-ID eine Zugriffsberechtigung (213) hat oder nicht; und
Mittel, die dazu eingerichtet sind, zu bestimmen, ob die Schlüsselwörter (214) dieser Datensätze die Volltextsuchbedingung erfüllen oder nicht, wenn bestimmt wird, dass die Zugangsberechtigung (213) vorhanden ist.

3. Dateisuchsystem nach Anspruch 2, das ferner einen Webserver (7) umfasst, der mit der Kommunikationsleitung (9) über das Internet kommunikationsfähig verbunden ist, wobei das Index-1-Erzeugungsmittel Mittel umfasst, die dazu eingerichtet sind, die Index-1-Datei (21) in Bezug auf suchbare Dateien, die auf einer Speichervorrichtung (72) des Webservers (7) gespeichert sind, durch Webcrawling zu erzeugen, und wobei das Index-1-Suchmittel Mittel umfasst, die dazu eingerichtet sind, in der Index-1-Datei (21) zu suchen, die durch das Index-1-Erzeugungsmittel erzeugt wurde.

4. Computerprogrammprodukt, das Anweisungen umfasst, die bei Ausführung durch ein Dateisuchsystem, in dem ein erster Dateisuchserver (5), ein zweiter Dateisuchserver (1), ein Dateiserver (4) und ein Client (3) über eine drahtgebundene oder drahtlose Kommunikationsleitung (9) kommunikationsfähig miteinander verbunden sind, bewirken, dass der erste Dateisuchserver (5) Folgendes ausführt:
eine Index-1-Erzeugungsfunktion, die dazu eingerichtet ist, Index-1-Datensätze (210) aus suchbaren Dateien, die auf einer mit dem Dateiserver (4) verbundenen Speichervorrichtung (42) gespeichert sind, zu erstellen und in einer Index 1-Datei (21) zu speichern, wobei die Index-i-Datensätze mindestens Dateinamen (211, 221b), Dateipfade (212, 221c), Zugriffsrechte (213) und Schlüsselwörter (214) enthalten;
und ferner bewirken, dass der zweite Dateisuchserver (1) Folgendes ausführt:
eine Index-2-Erzeugungsfunktion, die dazu eingerichtet ist, Index-2-Datensätze (220) aus suchbaren Dateien zu erstellen und in einer Index-2-Datei zu speichern, wobei die Index-2-Datensätze (220) System-Metadaten (221) umfassen, die mindestens Dateinamen (211, 221b) und Dateipfade (212, 221C), Standard-Metadaten (222) und benutzerdefinierte Metadaten (223) enthalten;
eine Funktion, die dazu eingerichtet ist, einen in der Suchanfrage enthaltenen bedingten Suchausdruck beim Empfangen einer Suchanfrage von dem Client (3) zu analysieren, und die dazu eingerichtet ist, basierend auf dem bedingten Suchausdruck zu bestimmen, ob eine Metadatensuche durchgeführt werden soll oder nicht;
eine Metadatensuchfunktion, die dazu eingerichtet ist, Metadatenabgleichsdatensätzen unter den Index-2-Datensätzen (220) der Index-2-Datei auszuwählen, die einer Bedingung entsprechen, die auf dem bedingten Suchausdruck basiert, wenn bestimmt wird, dass eine Metadatensuche durchgeführt werden soll;
eine Funktion, die dazu eingerichtet ist, nach Durchführung einer Metadatensuche oder wenn bestimmt wird, dass keine Metadatensuche durchgeführt werden soll, zu bestimmen, ob eine Volltextsuche durchgeführt werden soll oder nicht, wobei die Volltextsuche auf dem bedingten Suchausdruck basiert;
eine Volltextsuchfunktion, die dazu eingerichtet ist, eine Volltextsuche in Bezug auf die Index-1-Datei (21) durch Referenzieren der Schlüsselwörter (214) basierend auf dem bedingten Suchausdruck und den Metadatenabgleichsdatensätzen durchzuführen, wenn bestimmt wird, dass eine Volltextsuche durchgeführt werden soll;
eine Funktion, die dazu eingerichtet ist, jedes Datenelement eines Index-1-Datensatzes (210), der ein abgerufener Schlüsselwortabgleichsdatensatz ist, an den Client (3) zu übertragen, wenn eine Volltextsuche durchgeführt wird, und die Metadatenabgleichsdatensätze an den Client (3) zu übertragen, wenn bestimmt wird, dass keine Volltextsuche durchgeführt werden soll;
eine Anzahl von durch die Metadatensuche abgerufenen Metadatenabgleichsdatensätzen mit einer vorbestimmten Zahl an Fällen zu vergleichen, in denen sowohl die Metadatensuche als auch die Volltextsuche durchgeführt werden sollen; und
ein Bestätigungsergebnis, ob die Volltextsuche ausgeführt werden soll oder nicht, von dem Client (3) in Fällen zu empfangen, in denen die Anzahl der Datensätze in dem Metadatenabgleichsdatensatz größer als die vorbestimmte Zahl ist;
wobei der erste und der zweite Dateisuchserver (5, 1) entweder der gleiche Dateisuchserver oder zwei verschiedene, kommunikationsfähig miteinander verbundene Dateisuchserver sind.

5. Computerprogrammprodukt nach Anspruch 4, wobei ferner bewirkt wird, dass der erste Dateisuchserver (5) Folgendes ausführt:
eine Index-1-Suchfunktion, die dazu eingerichtet ist, in der Index-1-Datei (21) zu suchen; und
wobei ferner bewirkt wird, dass der zweite Dateisuchserver (5) eine andere Suchfunktion ausführt, die dazu eingerichtet ist, eine weitere Suche durchzuführen,
wobei die andere Suchfunktion bewirkt, dass der zweite Dateisuchserver (5) Folgendes ausführt:
eine Funktion, die dazu eingerichtet ist, eine Volltextsuchbedingung aus dem bedingten Suchausdruck zu extrahieren, wenn bestimmt wird, dass eine Volltextsuche durchgeführt werden soll; und
eine Funktion, die dazu eingerichtet ist, die extrahierte Volltextsuchbedingung zusammen mit den Dateipfaden (221c) der Metadatenabgleichsdatensätze und einer vom Client (3) empfangenen Benutzer-ID an die Index-1-Suchfunktion zu übertragen, wobei die Index-1-Suchfunktion bewirkt, dass der erste Dateisuchserver (5) Folgendes ausführt:
eine Funktion, die dazu eingerichtet ist, diejenigen Index-1-Datensätze (210) beim Empfangen der Volltextsuchbedingung zusammen mit den Dateipfaden (221c) der Metadatenabgleichsdatensätze und der Benutzer-ID von der anderen Suchfunktion, zu referenzieren, deren Dateipfade in Bezug auf alle empfangenen Dateipfade (221c) der Metadatenabgleichsdatensätze auf identische Werte eingestellt sind, um basierend auf der Zugriffsberechtigung (213) dieser Datensätze festzustellen, ob die empfangene Benutzer-ID eine Zugriffsberechtigung (213) hat oder nicht; und
eine Funktion, die dazu eingerichtet ist, zu bestimmen, ob die Schlüsselwörter (214) dieser Datensätze die Volltextsuchbedingung erfüllen oder nicht, wenn bestimmt wird, dass die Zugangsberechtigung (213) vorhanden ist.

6. Computerprogrammprodukt nach Anspruch 5, wobei das Dateisuchsystem ferner einen Webserver (7) umfasst, der mit der Kommunikationsleitung (9) über das Internet kommunikationsfähig verbunden ist, wobei die Index-1-Erzeugungsfunktion bewirkt, dass der erste Dateisuchserver (5) eine Funktion ausführt, die dazu eingerichtet ist, die Index-1-Datei (21) in Bezug auf suchbare Dateien, die auf einer Speichervorrichtung (72) des Webservers (7) gespeichert sind, durch Webcrawling zu erzeugen, und wobei die Index-1-Suchfunktion bewirkt, dass der erste Dateisuchserver (5) eine Funktion ausführt, die dazu eingerichtet ist, in der Index-1-Datei (21) zu suchen, die durch das Index-1-Erzeugungsmittel erzeugt wurde.

## Revendications

1. Système de recherche de fichiers dans lequel des premier et deuxième serveurs de recherche de fichiers (5, 1), un serveur de fichiers (4) et un client (3) sont interconnectés en communication par le biais d'une ligne de communication filaire ou sans fil (9), le premier serveur de recherche de fichiers (5) comprenant :
un moyen de création d'index 1 (11) adapté pour créer, à partir de fichiers soumis à la recherche sur un dispositif de stockage (42) connecté au serveur de fichiers (4), et conserver en mémoire dans un fichier d'index 1 (21) des enregistrements d'index 1 (210) incluant au moins des noms de fichiers (211, 221b), des chemins de fichiers (212, 221c), une autorité d'accès (213) et des mots-clés (214) ;
dans lequel le deuxième serveur de recherche de fichiers (1) comprend :
un moyen de création d'index 2 adapté pour créer, à partir de fichiers soumis à la recherche, et conserver en mémoire dans un fichier d'index 2 des enregistrements d'index 2 (220) comprenant des métadonnées de système (221) incluant au moins des noms de fichiers (211, 221b) et des chemins de fichiers (212, 221c), des métadonnées standards (222) et des métadonnées définies par l'utilisateur (223) ;
un moyen adapté pour analyser, à la réception d'une requête de recherche venant du client (3), une expression de recherche conditionnelle incluse dans la requête de recherche, et adapté pour déterminer d'exécuter ou non une recherche de métadonnées en se basant sur l'expression de recherche conditionnelle ;
un moyen de recherche de métadonnées adapté pour sélectionner, s'il est déterminé qu'une recherche de métadonnées doit être exécutée et à partir des enregistrements d'index 2 (220) du fichier d'index 2, des enregistrements correspondant aux métadonnées qui correspondent à une condition en se basant sur l'expression de recherche conditionnelle ;
un moyen adapté pour déterminer, après qu'une recherche de métadonnées a été effectuée ou s'il est déterminé qu'aucune recherche de métadonnées ne doit être exécutée, d'exécuter ou non une recherche de texte intégral, la recherche de texte intégral étant basée sur l'expression de recherche conditionnelle ;
un moyen de recherche de texte intégral adapté pour exécuter une recherche de texte intégral par rapport au fichier d'index 1 (21), s'il est déterminé qu'une recherche de texte intégral doit être exécutée, en référençant les mots-clés (214) en se basant sur l'expression de recherche conditionnelle et sur les enregistrements correspondant aux métadonnées ; un moyen adapté pour transmettre au client (3), si une recherche de texte intégral est exécutée, chaque élément de donnée d'un enregistrement d'index 1 (210) qui est un enregistrement correspondant à un mot-clé qui est récupéré et pour transmettre au client (3), s'il est déterminé qu'aucune recherche de texte intégral ne doit être exécutée, les enregistrements correspondant aux métadonnées ;
**caractérisé par** :
un moyen adapté pour comparer un nombre d'enregistrements correspondant à des métadonnées récupérés par le biais de la recherche de métadonnées avec un nombre pré-défini dans des cas où à la fois la recherche de métadonnées et la recherche de texte intégral doivent être exécutées ; et un moyen pour recevoir un résultat de confirmation venant du client (3) selon que la recherche de texte intégral doit être exécutée ou non, dans des cas où le nombre d'enregistrements dans l'enregistrement correspondant aux métadonnées est plus grand que le nombre pré-défini ; et
dans lequel lesdits premier et deuxième serveurs de recherche de fichiers (5, 1) sont soit le même serveur de recherche de fichiers ou deux serveurs de recherche de fichiers différents interconnectés en communication.

2. Système de recherche de fichiers selon la revendication 1, dans lequel le premier serveur de recherche de fichiers (5) comprend :
un moyen de recherche d'index 1 adapté pour chercher dans le fichier d'index 1 (21) ; et dans lequel le deuxième serveur de recherche de fichiers (5) comprend un moyen d'autre recherche adapté pour exécuter une autre recherche, dans lequel le moyen d'autre recherche comprend :
un moyen adapté pour extraire, s'il est déterminé qu'une recherche de texte intégral doit être exécutée, une condition de recherche de texte intégral à partir de l'expression de recherche conditionnelle ; et
un moyen adapté pour transmettre au moyen de recherche d'index 1 la condition de recherche de texte intégral extraite conjointement avec les chemins de fichier (221c) des enregistrements correspondant aux métadonnées et un ID d'utilisateur reçu du client (3), et le moyen de recherche d'index 1 comprend : un moyen adapté pour référencer, à la réception venant du moyen d'autre recherche, de la condition de recherche de texte intégral conjointement avec les chemins de fichier (221c) des enregistrements correspondant aux métadonnées et l'ID d'utilisateur, les enregistrements d'index 1 (210) dont les chemins de fichier sont paramétrés à des valeurs identiques par rapport à tous les chemins de fichiers (221c) reçus des enregistrements correspondant aux métadonnées pour déterminer si l'ID d'utilisateur reçu a l'autorité d'accès (213) ou non en se basant sur l'autorité d'accès (213) de ces enregistrements ; et
un moyen adapté pour déterminer, s'il est déterminé que l'autorité d'accès (213) est présente, si les mots-clés (214) de ces enregistrements satisfont ou non la condition de recherche de texte intégral.

3. Système de recherche de fichiers selon la revendication 2, comprenant en outre un serveur web (7) connecté en communication à la ligne de communication (9) par Internet, dans lequel le moyen de création d'index 1 comprend un moyen adapté pour créer, par rapport aux fichiers soumis à la recherche conservés en mémoire sur un dispositif de stockage (72) du serveur web (7), le fichier d'index 1 (21) par indexation des ressources web, et le moyen de recherche d'index 1 comprend un moyen adapté pour chercher dans le fichier d'index 1 (21) créé par le moyen de création d'index 1.

4. Produit de programme informatique comprenant des instructions qui, lorsqu'elles sont exécutées par un système de recherche de fichiers dans lequel un premier serveur de recherche de fichiers (5), un deuxième serveur de recherche de fichiers (1), un serveur de fichiers (4) et un client (3) sont interconnectés en communication par le biais d'une ligne de communication filaire ou sans fil (9), font exécuter au premier serveur de recherche de fichiers (5):
une fonction de création d'index 1 adaptée pour créer, à partir de fichiers soumis à la recherche sur un dispositif de stockage (42) connecté au serveur de fichiers (4), et conserver en mémoire dans un fichier d'index 1 (21) des enregistrements d'index 1 (210) incluant au moins des noms de fichiers (211, 221b), des chemins de fichiers (212, 221c), une autorité d'accès (213) et des mots-clés (214) ;
et font exécuter au deuxième serveur de recherche de fichiers (1):
une fonction de création d'index 2 adaptée pour créer, à partir de fichiers soumis à la recherche, et conserver en mémoire dans un fichier d'index 2 des enregistrements d'index 2 (220) comprenant des métadonnées de système (221) incluant au moins des noms de fichiers (211, 221b) et des chemins de fichiers (212, 221c), des métadonnées standards (222) et des métadonnées définies par l'utilisateur (223) ;
une fonction adaptée pour analyser, à la réception d'une requête de recherche venant du client (3), une expression de recherche conditionnelle incluse dans la requête de recherche, et adaptée pour déterminer d'exécuter ou non une recherche de métadonnées en se basant sur l'expression de recherche conditionnelle ;
une fonction de recherche de métadonnées adaptée pour sélectionner, s'il est déterminé qu'une recherche de métadonnées doit être exécutée et à partir des enregistrements d'index 2 (220) du fichier d'index 2, des enregistrements correspondant aux métadonnées qui correspondent à une condition en se basant sur l'expression de recherche conditionnelle ;
une fonction adaptée pour déterminer, après qu'une recherche de métadonnées a été effectuée ou s'il est déterminé qu'aucune recherche de métadonnées ne doit être exécutée, d'exécuter ou non une recherche de texte intégral, la recherche de texte intégral étant basée sur l'expression de recherche conditionnelle ;
une fonction de recherche de texte intégral adaptée pour exécuter une recherche de texte intégral par rapport au fichier d'index 1 (21), s'il est déterminé qu'une recherche de texte intégral doit être exécutée, en référençant les mots-clés (214) en se basant sur l'expression de recherche conditionnelle et sur les enregistrements correspondant aux métadonnées ;
une fonction adaptée pour transmettre au client (3), si une recherche de texte intégral est exécutée, chaque élément de donnée d'un enregistrement d'index 1 (210) qui est un enregistrement correspondant à un mot-clé qui est récupéré et pour transmettre au client (3), s'il est déterminé qu'aucune recherche de texte intégral ne doit être exécutée, les enregistrements correspondant aux métadonnées ;
comparer un nombre d'enregistrements correspondant à des métadonnées récupérés par le biais de la recherche de métadonnées avec un nombre pré-défini dans des cas où à la fois la recherche de métadonnées et la recherche de texte intégral doivent être exécutées ; et recevoir un résultat de confirmation venant du client (3) selon que la recherche de texte intégral doit être exécutée ou non, dans des cas où le nombre d'enregistrements dans l'enregistrement correspondant aux métadonnées est plus grand que le nombre pré-défini; et
dans lequel lesdits premier et deuxième serveurs de recherche de fichiers (5, 1) sont soit le même serveur de recherche de fichiers ou deux serveurs de recherche de fichiers différents interconnectés en communication.

5. Produit de programme informatique selon la revendication 4, dans lequel il est fait exécuter au premier serveur de recherche de fichiers (5):
une fonction de recherche d'index 1 adaptée pour chercher dans le fichier d'index 1 (21) ; et
dans lequel il est fait exécuter au deuxième serveur de recherche de fichiers (1) une fonction d'autre recherche adaptée pour exécuter une autre recherche, dans lequel la fonction d'autre recherche fait que le deuxième serveur de recherche de fichiers (1) exécute :
une fonction adaptée pour extraire, s'il est déterminé qu'une recherche de texte intégral doit être exécutée, une condition de recherche de texte intégral à partir de l'expression de recherche conditionnelle ; et une fonction adaptée pour transmettre à la fonction de recherche d'index 1 la condition de recherche de texte intégral extraite conjointement avec les chemins de fichier (221c) des enregistrements correspondant aux métadonnées et un ID d'utilisateur reçu du client (3), et dans lequel la fonction de recherche d'index 1 fait que le premier serveur de recherche de fichiers (5) exécute :
une fonction adaptée pour référencer, à la réception venant de la fonction d'autre recherche, de la condition de recherche de texte intégral conjointement avec les chemins de fichier (221c) des enregistrements correspondant aux métadonnées et l'ID d'utilisateur, les enregistrements d'index 1 (210) dont les chemins de fichier sont paramétrés à des valeurs identiques par rapport à tous les chemins de fichiers (221c) reçus des enregistrements correspondant aux métadonnées pour déterminer si l'ID d'utilisateur reçu a l'autorité d'accès (213) ou non en se basant sur l'autorité d'accès (213) de ces enregistrements ; et
une fonction adaptée pour déterminer, s'il est déterminé que l'autorité d'accès (213) est présente, si les mots-clés (214) de ces enregistrements satisfont ou non la condition de recherche de texte intégral.

6. Produit de programme informatique selon la revendication 5, dans lequel le système de recherche de fichiers comprend en outre un serveur web (7) connecté en communication à la ligne de communication (9) par internet, dans lequel la fonction de création d'index 1 fait que le premier serveur de recherche de fichiers (5) exécute une fonction adaptée pour créer, par rapport aux fichiers soumis à la recherche conservés en mémoire sur un dispositif de stockage (72) du serveur web (7), le fichier d'index 1 (21) par indexation des ressources web, et la fonction de recherche d'index 1 fait que le premier serveur de recherche de fichiers (5) exécute une fonction adaptée pour chercher dans le fichier d'index 1 (21) créé par la fonction de création d'index 1.
